(19) **Europäisches Patentamt / European Patent Office / Office européen des brevets**

(11) **EP 2 351 668 A2**

(12) # EUROPEAN PATENT APPLICATION
published in accordance with Art. 153(4) EPC

(43) Date of publication:
**03.08.2011 Bulletin 2011/31**

(51) Int Cl.:
**B60R 11/02** (2006.01)  **B60R 1/00** (2006.01)
**B60R 11/04** (2006.01)  **G08G 1/16** (2006.01)

(21) Application number: **09812856.4**

(22) Date of filing: **02.09.2009**

(86) International application number:
**PCT/JP2009/004314**

(87) International publication number:
**WO 2010/029707 (18.03.2010 Gazette 2010/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.09.2008 JP 2008235469**
**12.09.2008 JP 2008235470**
**19.09.2008 JP 2008241267**

(71) Applicant: **Kabushiki Kaisha Toshiba**
**Minato-ku**
**Tokyo 105-8001 (JP)**

(72) Inventors:
• **OGAWA, Masatoshi**
**Tokyo 105-8001 (JP)**
• **INABA, Hitoshi**
**Tokyo 105-8001 (JP)**
• **OKUMURA, Haruhiko**
**Tokyo 105-8001 (JP)**

• **SASAKI, Takashi**
**Tokyo 105-8001 (JP)**
• **OKADA, Naotada**
**Tokyo 105-8001 (JP)**
• **HOTTA, Aira**
**Tokyo 105-8001 (JP)**
• **HORIUCHI, Kazuo**
**Tokyo 105-8001 (JP)**
• **HAGIWARA, Tsuyoshi**
**Tokyo 105-8001 (JP)**
• **NAGAHARA, Osamu**
**Tokyo 105-8001 (JP)**
• **MATSUBAYASHI, Toshiaki**
**Tokyo 105-8001 (JP)**

(74) Representative: **HOFFMANN EITLE**
**Patent- und Rechtsanwälte**
**Arabellastraße 4**
**81925 München (DE)**

(54) **IMAGE IRRADIATION SYSTEM AND IMAGE IRRADIATION METHOD**

(57)    To provide an image irradiation system and an image irradiation method which can make an image information in an outdoor side of a vehicle be recognized by a driver precisely without widely moving a view point of the driver.

An image irradiation system includes a first photographing module photographing a driver of a vehicle, a position calculation module calculating a single eye position of the driver from an image photographed by the first photographing module, an image information generating module creating an outdoor image information of the vehicle, and an irradiation module irradiating the outdoor image information to the single eye position calculated by the position calculation module.

FIG. 1

**EP 2 351 668 A2**

**Description**

BACKGROUND OF THE INVENTION

Technical Field

The present invention relates to an image irradiation system and an image irradiation method for assisting a drive by irradiating an information image in an outdoor onto a driver of a vehicle.

Background art

An assisting system for the driver of the vehicle (a motor vehicle) carrying out a safety drive has been variously improved conventionally.

For example, in a vehicle of a coupe type or a sedan type in which a vehicle forward portion is long, a leading end portion of the vehicle cannot be visually observed from a driver. Accordingly, fender poles may be installed in both sides of the leading end of the vehicle for preventing the leading end portion of the vehicle from being scuffed by a wall or the like. However, since the driver is regarded as an unskilled driver or a beginner by installing the fender poles, some drivers give up installing.

Accordingly, as a technique taking the place of the fender pole, there has been proposed a method for equipping a vehicle with an ultrasonic sonar so as to inform of an existence of an obstacle existing around the vehicle (refer, for example, to Japanese Patent Application Laid-Open No. 2002-59798).

The vehicle is generally provided with back mirrors (fender mirrors) installed in the vicinity of both ends of the leading end portion of the vehicle or back mirrors (door mirrors) installed in the vicinity of front doors of the vehicle for the driver recognizing a rear side of the vehicle.

However, in the case that the fender mirrors are installed, a design characteristic and an aerodynamic characteristic of the vehicle are deteriorated. Further, in the case that the door mirrors are installed, the design characteristic and the aerodynamic characteristic of the vehicle are improved in some degree; however, it is necessary to widely move a viewpoint at a time of recognizing the rear side of the vehicle.

Accordingly, there has been proposed a method for displaying a vehicle rear side image photographed by a compact camera on a liquid crystal monitor installed in a dash board or the like in the vehicle (refer, for example, to Japanese Patent Application Laid-Open No. 2005-173882).

Further, there is a case that a field of view is lowered due to bad weather such as a fog or a snowstorm. In this case, there is a risk that the driver of the vehicle loses a course so as to deviate from a traffic lane, and comes into collision with a forward vehicle or an obstacle without sensing it. Then, there has been presented a technique of detecting a front side by using a GPS or a millimeter wave radar and displaying the image on a liquid crystal display device (refer, for example, to "ITS for Supporting Safe Road Environment", written by Takano et al., Hitachi Review, September 2004, Vol. 86, Number 9).

In the method described in Japanese Patent Application Laid-Open No. 2002-59798, since a distance resolution of the ultrasonic sonar is low, it is hard to recognize such a vehicle width distance that the leading end portion of the vehicle is scuffed or not by the wall or the like. In the method described in Japanese Patent Application Laid-Open No. 2005-173882, since it is not necessary to install the back mirrors in an outer side of the vehicle, the design characteristic and the aerodynamic characteristic of the vehicle are improved; however, it is necessary for the driver to widely move the view point for checking out the liquid crystal monitor. Further, according to the method shown in "ITS for Supporting Safe Road Environment", written by Takano et al., Hitachi Review, September 2004, Vol. 86, Number 9, the information is displayed by using a screen of the liquid crystal display device in a state in which a whole surface of a front glass is visually confirmed as a white color in the fog or the snow storm. However, in this case, there is a possibility that a visual line of the driver is fixed to the liquid crystal display device and a recognition of an actual background from the front glass is delayed.

This invention is made for solving the problem mentioned above, and an object of the present invention is to provide an image irradiation system and an image irradiation method which can make an image information in an outdoor side of a vehicle be recognized by a driver precisely without widely moving a view point of the driver.

SUMMARY OF THE INVENTION

In order to achieve the object mentioned above, according to the present invention, there is provided an image irradiation system and an image irradiation method, including a first photographing module configured to photograph a driver of a vehicle, a position calculation module configured to calculate a single eye position of the driver from an image photographed by the first photographing module, an image information generating module configured to create outdoor image information of the vehicle; and an irradiation module configured to irradiate the outdoor image information to the single eye position calculated by the position calculation module.

According to this invention, it is possible to provide the image irradiation system and the image irradiation method which can make the image information in the outdoor side of the vehicle be recognized by the driver precisely without widely moving the view point of the driver.

BRIEF DESCRIPTION OF THE DRAWINGS

Fig. 1 is a system configuration view of an image irradiation system according to a first embodiment;
Fig. 2 is a view for explainig a method for calculating a single eye position on a YZ surface;
Fig. 3 is a view for explainig a method for calculating a head portion position on an XY surface;
Fig. 4 is a view obtained by projecting a fender pole on a virtual screen;
Fig. 5A is a view showing an ideal irradiation image and an actual irradiation image;
Fig. 5B is a view showing an image before a keystone distortion correction and an image after the keystone distortion correction;
Fig. 6 is a view expressing a relationship between a mirror angle and an irradiation position of the image;
Fig. 7 is a superposition view of a landscape and an image which are recognized by a driver;
Fig. 8 is a flow chart explaining an image creating motion by the image irradiation system according to the first embodiment;
Fig. 9 is a flow chart explaining a following motion of the image irradiation system according to the first embodiment;
Fig. 10 is a system configuration view of an image irradiation system according to a second embodiment;
Fig. 11 is a superposition view of a landscape and an image which are recognized by the driver;
Fig. 12 is a system configuration view of an image irradiation system according to a third embodiment;
Fig. 13 is a view showing an installed position of a camera;
Fig. 14 is an explanatory view of an image sampling method;
Fig. 15 is an explanatory view of the image sampling method;
Fig. 16 is a view showing a whole image created by a display position adjustment module;
Fig. 17 is a superposition view of a landscape and an image which are recognized by the driver;
Fig. 18 is an explanatory view of an image sampling position adjustment by a sampling position operation module;
Fig. 19 is a flow chart explaining an image creating motion by the image irradiation system according to the third embodiment;
Fig. 20 is a system configuration view of an image irradiation system according to a fourth embodiment;
Fig. 21 is a view showing an installed position of a camera;
Fig. 22 is a view showing a whole image created by a display position adjustment module;
Fig. 23 is a superposition view of a landscape and an image which are recognized by the driver;
Fig. 24 is a system configuration view of an image irradiation system according to a fifth embodiment;
Fig. 25 is a view showing one example of an image created by an image signal creation module; and
Fig. 26 is a flow chart showing a procedure of an image creating motion by an image irradiation system according to a fifth embodiment.

DESCRIPTION OF THE EMBODIMENTS

A description will be given below of embodiments according to the present invention with reference to the accompanying drawings.

First Embodiment

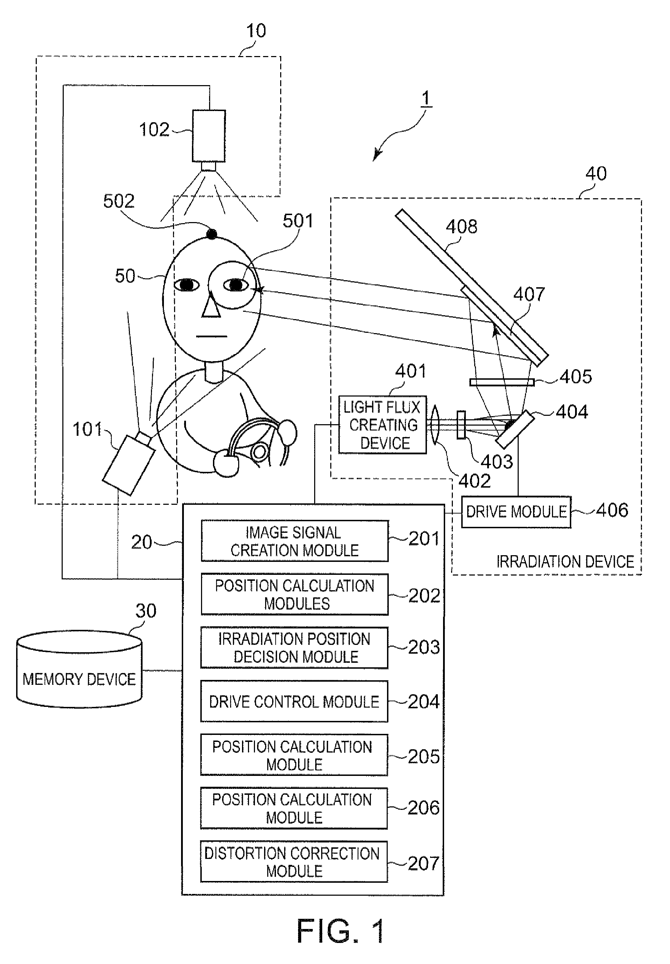

A description will be given below of an image irradiation system according to a first embodiment of the present invention with reference to Figs. 1 to 9.

Fig. 1 is a system configuration view of an image irradiation system 1 according to the first embodiment of the present invention. The image irradiation system 1 includes a photographing device 10, a central processing module 20, a memory device 30 and an irradiation device 40.

A description will be in detail given below of each of structures.

(photographing device 10)

The photographing device 10 includes a camera 101 and a camera 102. The camera 101 is installed approximately in a front face of a driver 50, and photographs a face of the driver 50 at a predetermined time interval. The camera 102 is installed approximately just above the driver 50, and photographs a head portion of the driver 50 at a predetermined time interval. The cameras 101 and 102 input each of the images of the photographed driver 50 to the central processing module 20.

(central processing module 20)

The central processing module 20 includes an image signal creation module 201, a position calculation module 202 (a first position calculation module), an irradiation position decision module 203, a drive control module 204, a position calculation module 205 (a second position calculation module), a position calculation module 206 (a third position calculation module), and a distortion correction module 207.

The position calculation module 202 detects a single eye 501 of the driver 50 per image input from the camera 101. The position calculation module 202 calculates a position on a plane (hereinafter, refer to as YZ surface) which is vertical to a traveling direction of the vehicle from a pixel position on the detected image of the single eye 501.

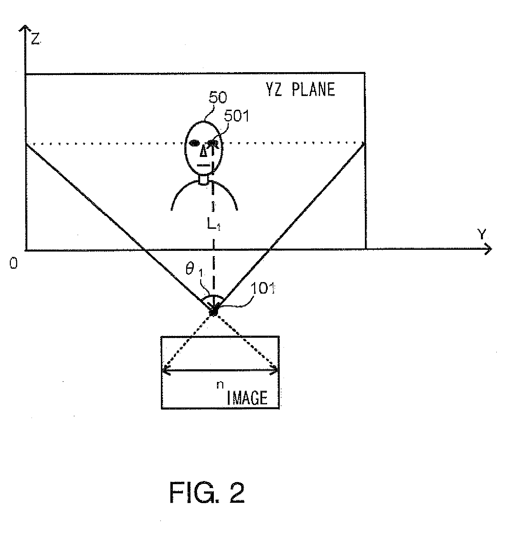

Fig. 2 is a view for explainig a method for calculating a position of the single eye 501 on the YZ surface. An axis Y in Fig. 2 shows a horizontal direction, and an axis Z shows a vertical direction. As shown in Fig. 2, on the assumption that a field angle in the Y-axis direction of the camera 101 is set to $\theta_1$, a vertical distance between the camera 101 and the single eye 501 is set to $L_1$, the number of pixels in the Y-axis direction of the camera 101 is set to n, and a distance on the Y-axis per unit pixel is set to $\Delta Y$, the following equation (1) is established.

$$\Delta Y = (2L_1 \times \tan(\theta_1/2))/n \qquad (1)$$

The position calculation module 202 calculates the position of the single eye 501 on the YZ surface by using the equation (1). Specifically, a zero point is decided on the YZ surface, and the number of the pixels between the zero point and the position of the single eye 501 is calculated. Next, the calculated pixel number is substituted for the equation (1). The field angle $\theta_1$ in the Y-axis direction of the camera 101 and the distance $L_1$ between the camera 101 and the single eye 501 can be previously measured. Accordingly, the position of the single eye 501 on the YZ surface can be calculated from the position on the image of the single eye 501.

In this case, in this first embodiment, the single eye 501 of the driver 50 is on the assumption that it moves only in the Y-axis direction, the single eye 501 does not move in the Z-axis direction, and the position on the Z-axis is assumed to be fixed. However, the position of the single eye 501 may be calculated in the Z-axis direction in the same manner as that of the Y-axis direction.

The irradiation position decision module 203 decides a position at which the image is irradiated, based on the position of the single eye 501 which is calculated by the position calculation module 202.

The drive control module 204 outputs a control signal to a drive module 406 in such a manner that the image is irradiated to the irradiation position decided by the irradiation position decision module 203.

In this case, a predetermined time is required until the position of the single eye 501 is calculated from the image photographed by the camera 101 and thereafter the image is irradiated to the position. Accordingly, in the case that the single eye 501 moves, there is a possibility that a difference is generated between the position at which the image is irradiated, and the actual position of the single eye 501. Accordingly, in the case that the single eye 501 moves, the structure may be made such that the image is irradiated to a position which is forward at an optional distance in a moving direction of the single eye 501 from the position calculated by the position calculation module 202. According to the structure mentioned above, even in the case that the position of the single eye 501 moves, it is possible to reduce an error between the position at which the image is irradiated and the actual position of the single eye 501.

The position calculation module 205 detects a center position 502 of the head portion of the driver 50 per image input from the camera 102. The position calculation module 205 calculates the position of the single eye 501 on a plane (hereinafter, refer to as XY surface) which is vertical to a vertical direction based on a pixel position on a center position 502 of the detected head portion.

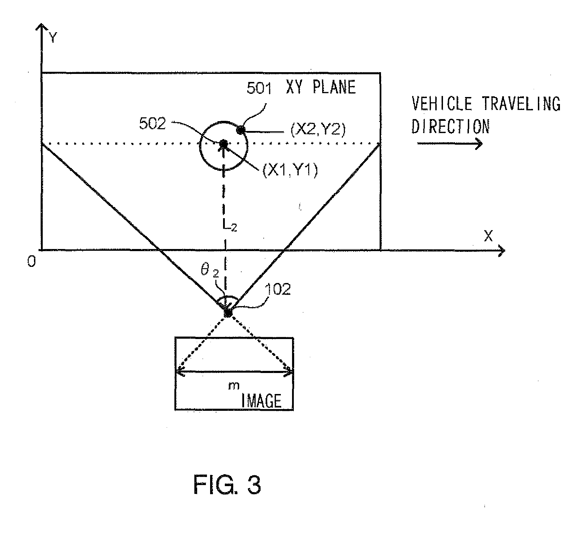

Fig. 3 is a view for explainig a method for calculating the position on the YX surface of the center position 502 of the head portion. An axis X in Fig. 3 expresses the traveling direction of the vehicle, and an axis Y expresses the same horizontal direction as Fig. 2. As shown in Fig. 3, on the assumption that a field angle in the X-axis direction of the camera 102 is set to $\theta_2$, a vertical distance between the camera 102 and the center position 502 of the head portion

is set to $L_2$, the number of pixels in the X-axis direction of the camera 102 is set to m, and a distance on the X-axis per unit pixel is set to $\Delta X$, the following equation (2) is established.

$$\Delta X = (2 L_2 \times \tan(\theta_2/2))/m \quad (2)$$

In this case, the distance $L_2$ between the camera 102 and the center position 502 of the head portion varies according to the driver 50. Accordingly, the distance $L_2$ between the camera 102 and the center position 502 of the head portion may be calculated by previously measuring a distance between the camera 102 and a driver seat and making the driver 50 input a seated height. Further, the position of the single eye 501 on the Z-axis can be calculated based on the distance $L_2$ value.

The position calculation module 206 calculates the position of the single eye 501 in an XYZ space based on the position on the YZ surface of the single eye 501 which is calculated by the position calculation module 202 and the position of the single eye 501 on the XY surface which is calculated by the position calculation module 205 so as to input to the image signal creation module 201.

The image signal creation module 201 creates an image signal of a fender pole which is recognized at the position of the single eye 501, based on a corresponding relationship between the position of the single eye 501 which is calculated by the position calculation module 206 and position information of the fender pole which is stored in the memory device 30 and is virtually installed in the vehicle. Next, the created image signal is input to the distortion correction module 207.

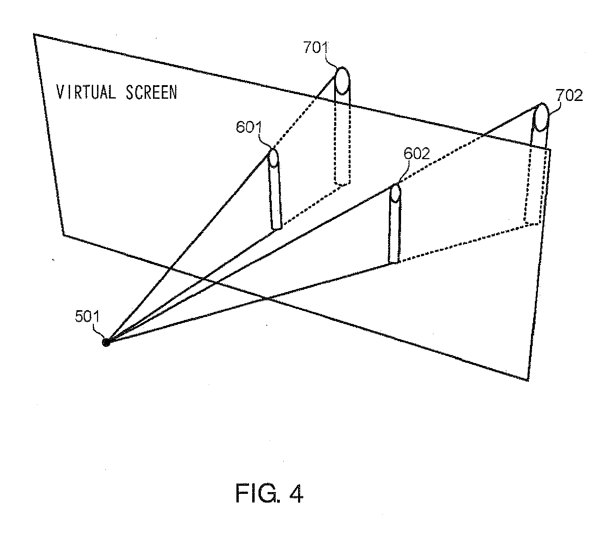

Fig. 4 is an explanatory view for creating the image of the fender pole. As shown in Fig. 4, the image signal creation module 201 sets a virtual screen between fender poles 701 and 702 which are virtually installed in the vehicle, and the position of the single eye 501 which is calculated by the position calculation module 206.

Next, the image signal creation module 201 draws a line connecting each of points constructing the fender poles 701 and 702 and the single eye 501, and creates image signals of fender poles 601 and 602 which are expressed as an intersecting point between the line and the virtual screen. Next, the image signal creation module 201 inputs the created image signal to the distortion correction module 207.

The distortion correction module 207 calculates an angle of rotation of a mirror provided in an irradiation position control module 404 based on a control signal input to a drive module 406 from the drive control module 204, and reads distortion correction information corresponding to the calculated angle from the memory device 30. Next, the distortion correction module 207 corrects the image signal input from the image signal creation module 201 based on the distortion correction information which is read from the memory device 30. In this case, the distortion correction information can be obtained by previously three-dimensionally measuring a shape of a front glass 408.

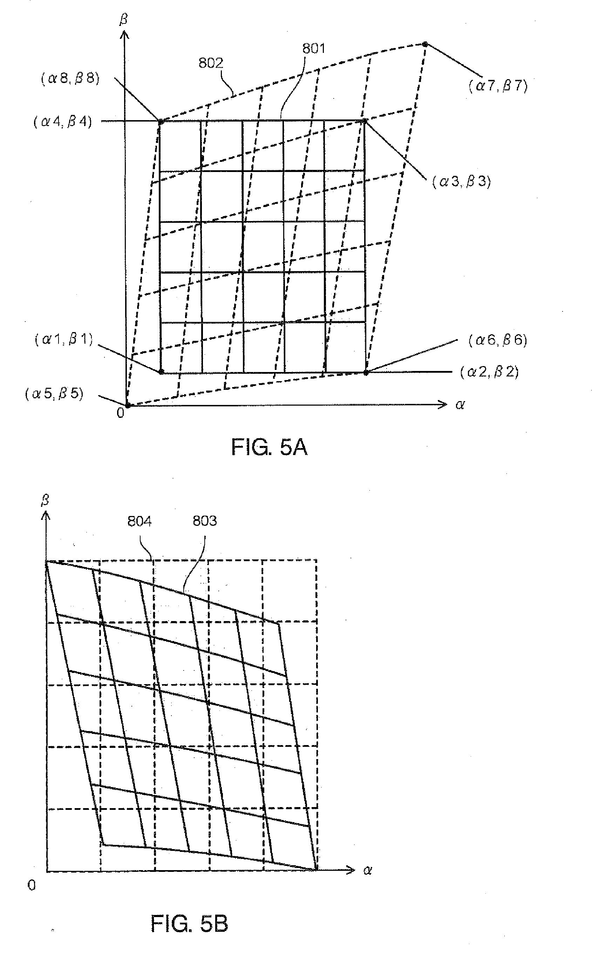

Fig. 5A is a view showing an ideal irradiation image 801 and an actual irradiation image 802. Fig. 5B is a view showing an image 803 before the distortion correction and an image 804 after the distortion correction. In this case, a horizontal direction of Figs. 5A and 5B is set to an axis $\alpha$ and a vertical direction thereof is set to an axis $\beta$.

In the case that the image is reflected by the mirror so as to be irradiated, a distortion is generated in the irradiation image corresponding to an angle of the mirror. Accordingly, if the image is irradiated without carrying out the distortion correction, the distortion is generated in the image as shown by the image 802 in Fig. 5A. Accordingly, as shown in Fig. 5B, the image 804 having no distortion can be obtained by irradiating the image 803 in which the position of each of the pixels constructing the image is previously moved.

Next, a description will be given of a correcting method.

First of all, positions of four corners of each of the ideal irradiation image 801 and the actually irradiated image 802 are measured. In this case, the positions of four corners of the image 801 are assumed to be $(\alpha 1, \beta 1)$, $(\alpha 2, \beta 2)$, $(\alpha 3, \beta 3)$ and $(\alpha 4, \beta 4)$. And, the positions of four corners of the image 802 are assumed to be $(\alpha 5, \beta 5)$, $(\alpha 6, \beta 6)$, $(\alpha 7, \beta 7)$ and $(\alpha 8, \beta 8)$.

Next, there is calculated a transformation matrix T of two rows and two lines moving the positions $(\alpha 5, \beta 5)$, $(\alpha 6, \beta 6)$, $(\alpha 7, \beta 7)$ and $(\alpha 8, \beta 8)$ of four corners of the image 802 to the positions $(\alpha 1, \beta 1)$, $(\alpha 2, \beta 2)$, $(\alpha 3, \beta 3)$ and $(\alpha 4, \beta 4)$ of four corners of the image 801. Next, the image 804 after the correction is created by correcting the position of each of the pixels constructing the image 803 before the distortion correction by the transformation matrix T.

In this case, a distorting way is differentiated by an angle of the mirror. Accordingly, the transformation matrix T is calculated per a predetermined mirror angle, and is previously stored as distortion correction information in the memory device 30.

(memory device 30)

In the memory device 30, there is stored the distortion correction information for correcting the distortion mentioned above and the position information of the fender poles which are virtually installed in the vehicle. In this case, the fender poles are constructed by a plurality of points. The position information of each of the points constructing the fender poles is stored in the memory device 30. As the memory device 30, a semiconductor memory, a magnetic memory, an optical disc and the like can be used.

Since the image information is generated by the memory device 30 and a portion relating to the creation of the image in the central processing module 20, both may be called in conjunction as an image information generating module.

(irradiation device 40)

The irradiation device 40 includes a light flux creating device 401, an irradiation lens 402, an irradiation range control module 403, an irradiation position control module 404, an image enlargement module 405, a drive module 406 and a reflection member 407.

The light flux creating device (the image creation module) 401 creates the image irradiated to the single eye 501 of the driver 50 from the image signal input from the distortion correction module 207, and irradiates the created image via the irradiation lens 402. As the light flux creating device 401, it is possible to use a liquid crystal panel, a digital micro mirror device (DMD) panel using a micro mirror, a light emitting diode (LED) light source projector and the like.

The irradiation range control module 403 controls an irradiation range of the image which is created by the light flux creating device 401. It is desirable to control a width of the irradiated image to about 6 cm. A distance between both eyes of an adult is about 6 cm. It is possible to effectively prevent the image from being irradiated to both eyes by controlling the width of the irradiated image to about 6 cm. As the irradiation range control module 403, it is possible to use a lenticular screen, a diffusion plate in which a diffusion angle is controlled, and the like.

The irradiation position control module 404 includes a stage which can be rotated in a horizontal direction and a vertical direction, and a mirror which is installed in the stage. The irradiation position control module 404 controls the angle of the mirror based on the rotation of the stage, and controls the irradiation position of the created image by the light flux creating device 401.

The drive module 406 is a motor driving the stage provided in the irradiation position control module 404. The drive module 406 drives the motor in response to the control signal from the drive control module 204, and rotationally actuates the stage of the irradiation position control module 404.

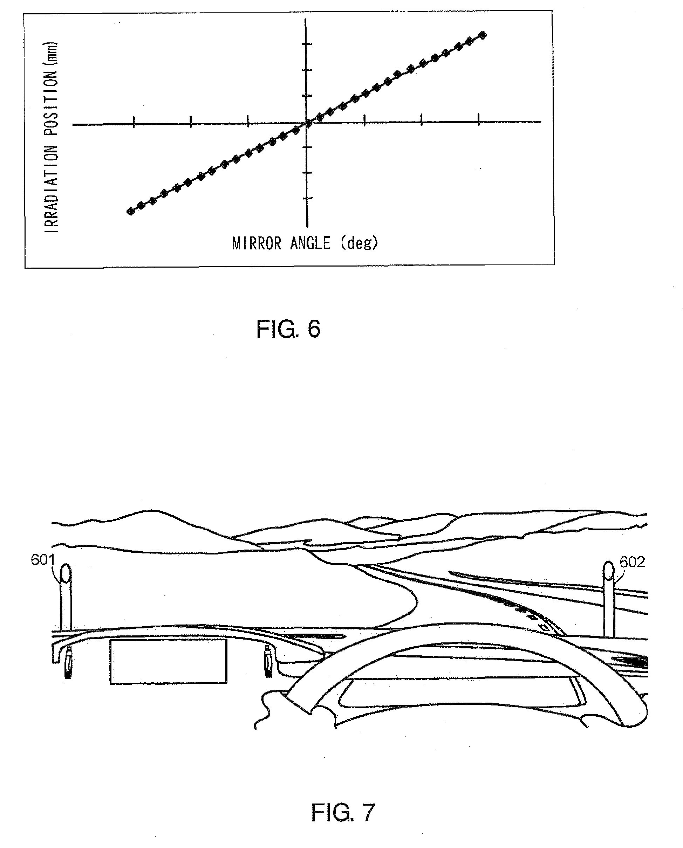

Fig. 6 is a view showing a relationship between the angle of the mirror of the irradiation position control module 404 and the irradiation position of the image. As shown in Fig. 6, the angle of the mirror and the irradiation position of the image come to a one-to-one corresponding relationship. The drive control module 204 calculates the angle of the mirror which is necessary for irradiating the image to the single eye 501 of the driver 50 based on this corresponding relationship so as to input the control signal to the drive module 406.

The image enlargement module 405 enlarges an irradiation size of the image from the irradiation position control module 404. The reflection member (a combiner) 407 reflects the image which is enlarged by the image enlargement module 405. The image reflected by the reflection member 407 is irradiated to the single eye 501 of the driver 50. Since the reflection member 407 is a semitransparent member which is attached to the front glass 408 of the vehicle, the driver 50 can visually confirm a forward landscape via the reflection member 407. In this case, the single eye 501 to which the image is irradiated may be a right eye or a left eye of the driver 50.

If a double image caused by the reflection of front and rear faces of the front glass is lowered to a trouble-free level, for example, by setting a virtual image distance far, the reflection member 407 mentioned above may be omitted.

Fig. 7 is a superposition view of the landscape and the image which are recognized by the driver 50 in the first embodiment. The fender poles 601 and 602 irradiated to the single eye 501 are visually confirmed so as to be superposed on the actual landscape, for the driver 50. The fender poles 601 and 602 can not be recognized by the other passengers than the driver 50 and the outdoor person. Accordingly, the driver 50 can recognize a vehicle width distance of the driving vehicle without being known by the other passenger and the outdoor person.

(image creating motion)

Next, a description will be given of an image creating motion by the image irradiation system 1.

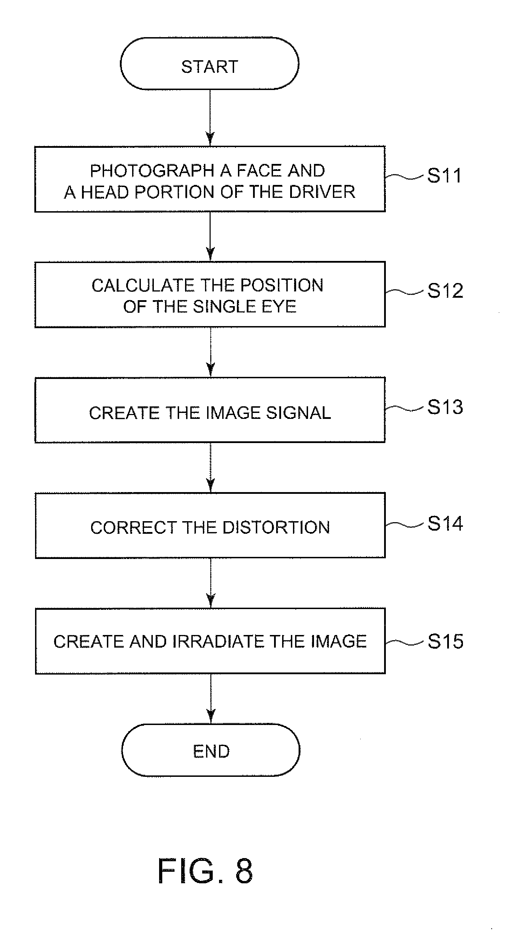

Fig. 8 is a flow chart explaining the image creating motion by the image irradiation system 1.

First of all, the cameras 101 and 102 respectively photograph a face and a head portion of the driver 50 (step S11), and input the photographed image to the position calculation modules 202 and 205.

The position calculation module 202 detects the single eye 501 of the driver 50 from the photographed image input from the camera 101. Next, the position calculation module 202 calculates the position of the single eye 501 on the YZ surface from the pixel position on the image of the detected single eye 501.

The position calculation module 205 detects the center position 502 of the head portion of the driver 50 from the photographed image input from the camera 102. Next, the position calculation module 205 calculates the position of the single eye 501 on the XY surface from the pixel position on the image of the center position 502 of the detected head portion.

The position calculation module 206 calculates the position of the single eye 501 in the XYZ space from the position on the YZ surface of the single eye 501 calculated by the position calculation module 202 and the position of the single eye 501 on the XY surface calculated by the position calculation module 205 so as to input to the image signal creation module 201 (step S12).

The image signal creation module 201 creates the image signal of the fender poles recognized at the position of the single eye 501 based on the corresponding relationship between the position of the single eye 501 calculated by the position calculation module 206 and the position information of the fender pole which is virtually installed in the vehicle (step S13). Next, the image signal creation module 201 inputs the created image signal to the distortion correction module 207.

The distortion correction module 207 creates the image signal obtained by correcting the distortion which is generated by the rotation of the mirror of the projection position control module 404 (step S14). Next, the position calculation module 207 inputs the image signal after the correction to the projection device 40. The projection device 40 creates the image from the image signal input from the distortion correction module 207 so as to irradiate to the single eye 501 (step S15).

(following motion of irradiated image)

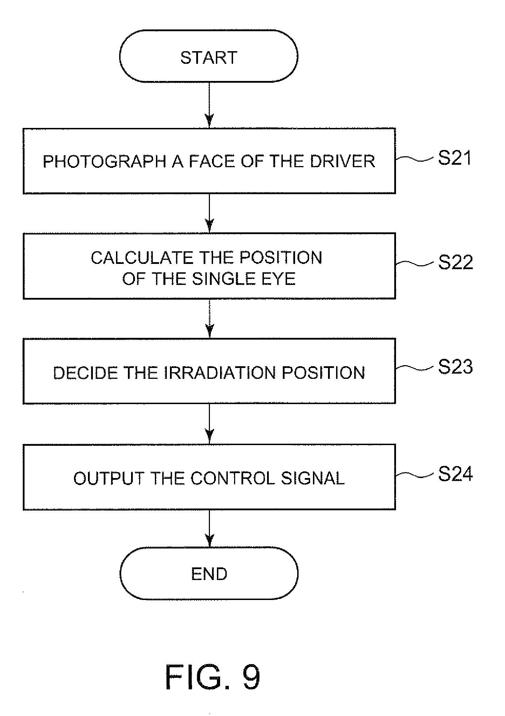

Next, a description will be given of a following motion of the image which is irradiated from the image irradiation system 1. Fig. 9 is a flow chart explaining the following motion of the image irradiation system 1.

First of all, the camera 101 photographs the face of the driver 50 (step S21), and input the photographed image to the position calculation module 202.

The position calculation module 202 detects the single eye 501 of the driver 50 per photographed image input from the camera 101. Next, the position calculation module 202 calculates the position on the YZ surface from the pixel position on the image of the detected single eye 501 (step S22).

The irradiation position decision module 203 decides the irradiation position to which the image is irradiated from the position of the single eye 501 on the YZ surface calculated by the position calculation module 202 (step S23).

The drive control module 204 outputs the control signal to the drive module 406 in such a manner that the image is irradiated to the irradiation position which is decided by the irradiation position decision module 203 (step S24).

As mentioned above, since the image irradiation system 1 according to the first embodiment irradiates the image of the fender poles to the single eye 501 of the driver 50, the driver can recognize the vehicle width distance of the driving vehicle without being known by the other passenger and the outdoor person.

Since the image is irradiated only to the single eye 501, any binocular parallax is not generated. Accordingly, it is possible to create a perspective only by changing the magnitudes of the fender poles 601 and 602, and it is possible to recognize the vehicle width distance approximately in the same manner as the case that the actual fender poles are installed.

Further, since the distortion generated by the rotation of the mirror of the projection position control module 404 is corrected, it is possible to effectively reduce the distortion of the fender poles which are recognized by the single eye 501.

Second Embodiment

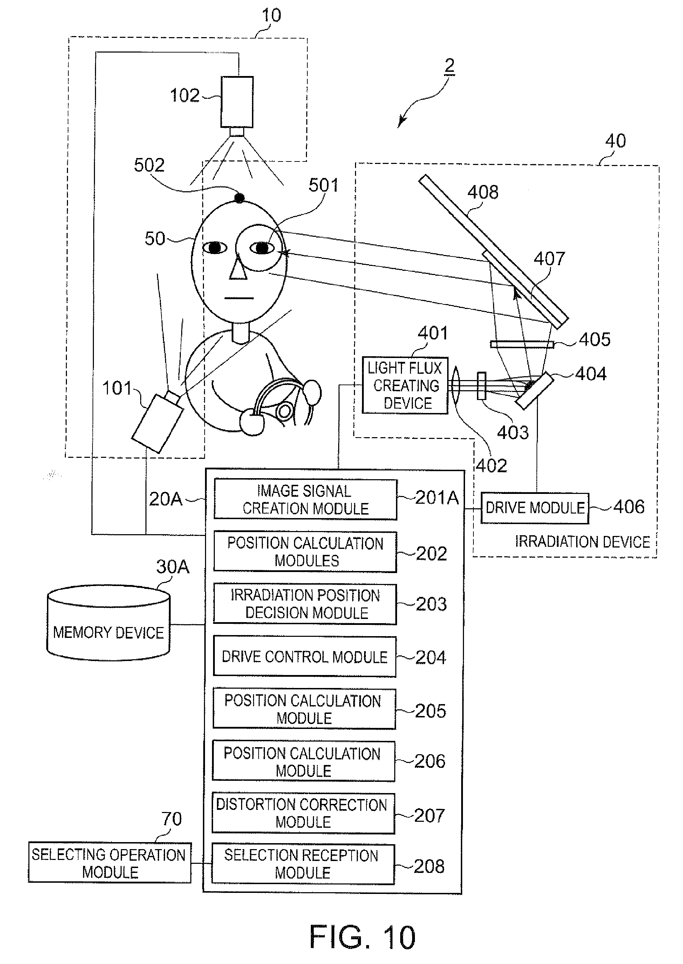

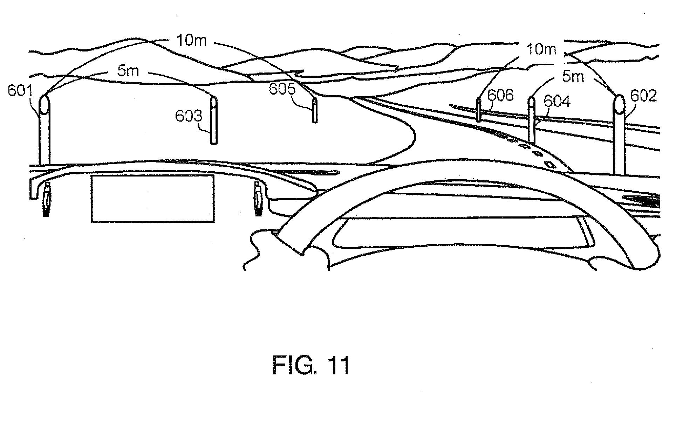

Fig. 10 is a system configuration view of an image irradiation system 2 according to a second embodiment. Fig. 11 is a superposition view of a landscape and an image which are recognized by the driver 50 in this second embodiment. In this second embodiment, an image obtained by projecting a plurality of fender poles having different installed positions on a virtual screen is irradiated to the single eye 501. A description will be given below of a concrete construction; however, the same reference numerals are attached to the same constructing elements as the constructing elements described in Fig. 1 and an overlapped description will not be repeated.

In a memory device 30A, there are further stored position information of fender poles which are virtually installed 5 m ahead of the leading portion of the vehicle and position information of fender poles which are virtually installed 10 m ahead of the leading portion of the vehicle, in addition to the information stored by the memory device 30 according to the first embodiment.

An image signal creation portion 201A of a central processing portion 20A creates an image signal obtained by projecting the fender poles which are installed in the leading portion of the vehicle, the fender poles which are installed 5 m ahead of the leading portion of the vehicle and the fender poles which are installed 10 m ahead of the leading portion of the vehicle onto the virtual screen, and inputs to the distortion correction module 207. In this case, a method for creating the image signal is the same as the method described in Fig. 4.

As a result, a plurality of fender poles 601 to 606 having the different installed positions from each other can be recognized by the driver 50, as shown in Fig. 11. The fender poles 601 and 602 indicate a vehicle width in the leading end portion of the vehicle. The fender poles 603 and 604 indicate a vehicle width in 5 m ahead of an own vehicle position. The fender poles 605 and 606 indicate a vehicle width in 10 m ahead of the own vehicle position. Accordingly, the driver 50 can recognize the vehicle widths in 5 m ahead and 10 m ahead.

If the image obtained by projecting a plurality of fender poles 601 to 606 is always irradiated, there is a case that the driver 50 feels burdensome. Accordingly, the image irradiation system 2 according to the second embodiment is structured such that the image signal of only the selected fender poles can be created.

A selecting operation module 70 is an operation button carrying out a selecting operation of the fender poles by the driver 50. The driver 50 can select which fender pole combination image signal should be created from respective combinations of the fender poles 601 and 602, the fender poles 603 and 604, and the fender poles 605 and 606, by operating the selecting operation module 70.

Each time when the driver 50 pushes the selecting operation module 70, the image irradiated to the single eye 501 is changed to the image constituted only by the fender poles 601 and 602, the image constituted only by the fender poles 603 and 604, the image constituted only by the fender poles 605 and 606, and the image constituted by the fender poles 601 to 606.

A selection reception module 208 gives instructions to an image signal creation module 201A so as to create the image signal of the combination of the fender poles selected by the selection operation module 70.

As mentioned above, the image irradiation system 2 according to the second embodiment irradiates the image of a plurality of fender poles having the different installed positions to the single eye 501 of the driver 50, the driver 50 can know the vehicle widths in 5 m ahead and 10 m ahead. As a result, it is possible to previously know whether or not the driving vehicle can pass at a time of crossing against a car coming from the opposite direction in a narrow road or at a position having a reduced width of road.

Since it is possible to irradiate the image of a necessary fender pole combination when the need arises, based on the operation of the selection operation module 70, it is possible to reduce the botheration caused by always displaying all the fender poles 601 to 606. The other effects are the same as those of the first embodiment.

Third Embodiment

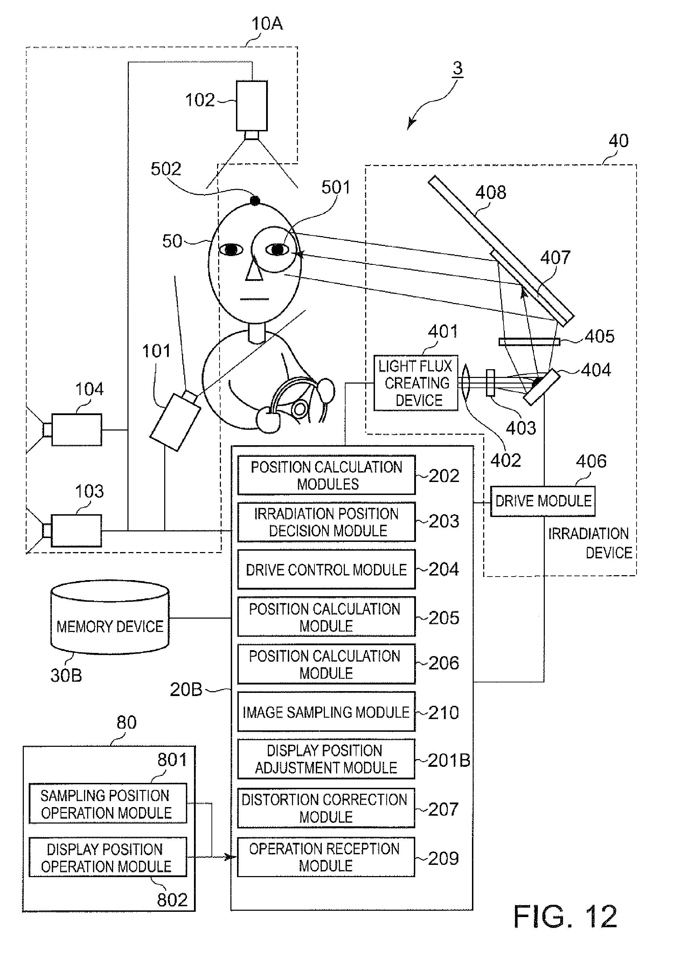

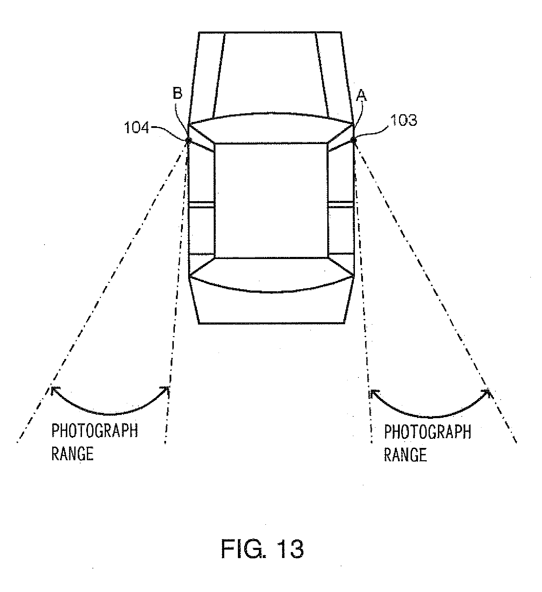

Fig. 12 is a system configuration view of an image irradiation system 3 according to a third embodiment of the present invention. Fig. 13 is a view showing installed position of cameras 103 (a first camera) and 104 (a second camera) provided in a photographing device 10A. The image irradiation system according to the third embodiment includes the photographing device 10A, a central processing device 20B, a memory device 30B, the irradiation device 40 and an operation device 80.

A description will be given below of each of the structures.

(photographing device 10A)

The photographing device 10A includes the cameras 101 to 104. The camera 101 is installed approximately in front of the driver 50, and photographs the face of the driver 60 at a predetermined time interval. The camera 102 is installed approximately just above the driver 60, and photographs the head portion of the driver 60 at a predetermined time interval. They have the same structure and function as those of the first embodiment.

Fig. 13 is a view showing one example of the installed positions of the cameras 103 and 104. A one-dot chain line in Fig. 13 expresses a photograph range of each of the cameras 103 and 104. The camera 103 is installed at a point A where a right door mirror is installed, and photographs a right rearward side of the vehicle. The camera 104 is installed at a point B where a left door mirror is installed, and photographs a left rearward side of the vehicle. In this case, the point A and the point B are one example of the installed positions of the cameras 103 and 104, and the other positions may be employed as far as the right and left rearward sides of the vehicle can be photographed.

Each of the cameras 101 to 104 inputs the photographed image to the central processing device 20B. A first photographing module is constructed by the cameras 101 and 102, and a second photographing module is constructed by the cameras 103 and 104. In this case, since the second photographing module in the third embodiment is the image information to be irradiated to the driver, it is included in the image information generating module.

(central processing device 20B)

The central processing device 20B includes the position calculation module 202, the irradiation position decision module 203, the drive control module 204, the position calculation module 205, the position calculation module 206, an image sampling module 210, a display position adjustment module 201B, the distortion correction module 207, and an operation reception module 209.

The functions and the motions of the position calculation module 202, the irradiation position decision module 203, the drive control module 204, the position calculation module 205, the position calculation module 206 and the distortion correction module 207 are basically the same as those of the first embodiment.

The position calculation module 206 calculates the position of the single eye 501 in the XYZ space so as to input to the image sampling module 210, as described in the first embodiment.

The image sampling module 210 samples at least a part of the image which is photographed by the cameras 103 and 104 so as to input to the display position adjustment module 201B.

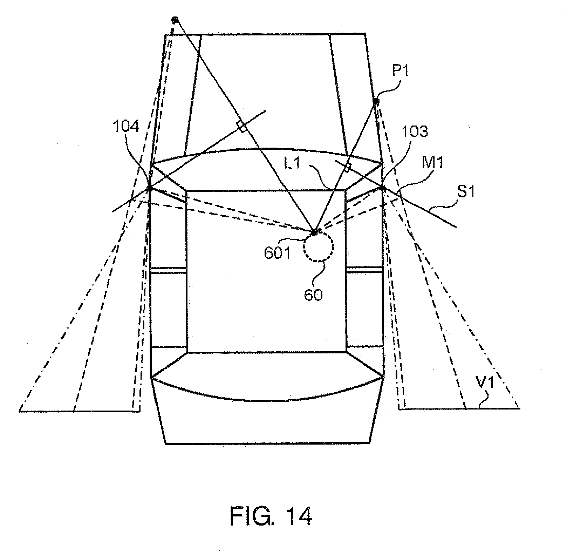

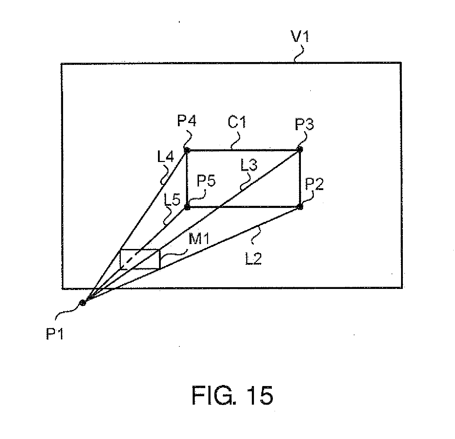

Figs. 14 and 15 are explanatory views of a method for sampling the image by the image sampling module 210. A description will be given of the sampling of the image which is photographed by the camera 103.

First of all, as shown in Fig. 14, a plane S1 including an outer peripheral line (frame) of a back mirror M1 virtually installed in a right side of the vehicle is assumed. Next, a perpendicular line $L_1$ is dropped from a position of the single eye 501 which is calculated by the position calculation module 206 to the plane S1, and a symmetric point P1 of the single eye 501 on an extension line of the perpendicular line $L_1$ with respect to the plane S1 is assumed. Next, a virtual plane V1 corresponding to the image which is photographed by the camera 103 is assumed at an optional position.

As shown in Fig. 15, straight lines L2 to L5 connecting the symmetric point P1 to four corners of the outer peripheral line (frame) of the back mirror M1 are assumed. Then, a region C1 in which four corners are formed by intersecting points P2 to P5 between the straight lines L2 to L5 and the virtual plane V1 comes to a sampling region. In this case, a rate of magnitude and a relative positional relationship between the region C1 and the virtual plane V1 are always constant regardless of the distance from the point P1. Accordingly, the positions of four corners of the region C1 corresponding to the sampling region can be derived from a relationship between the position of the symmetrical point P1 and the positions of four corners of the back mirror M1.

On the assumption that the position of the single eye 501 does not change widely during the drive of the vehicle, the positions of four corners of the region C1 can be defined by a linear equation of the position of the symmetrical point P1 and the positions of four corners of the back mirror M1. And, the sampling range of the image which is photographed by the camera 104 can be defined by a linear equation in the same manner. The linear equation defined as mentioned above is previously stored as information for deciding the sampling range of the image which is photographed by the cameras 103 and 104 in the memory device 30B.

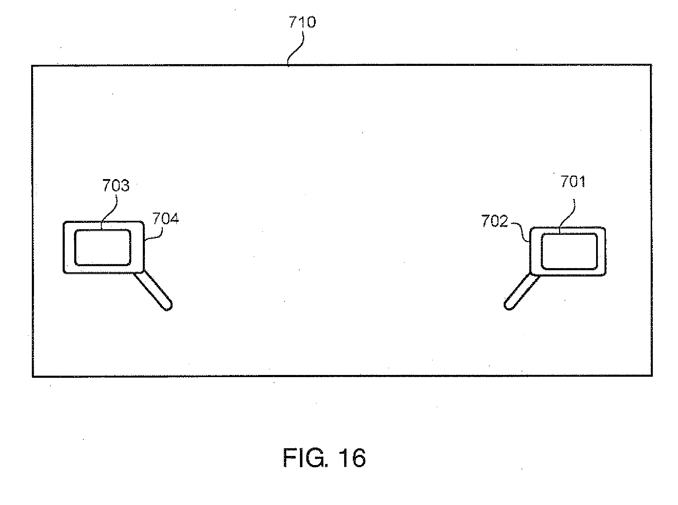

The display position adjustment module 201B adjusts the display position of the image which is input from the image sampling module 210. Fig. 16 is a view showing a whole image 710 which is created by the display position adjustment module 201B. An image 701 is an image which is sampled from the image photographed by the camera 103. An image 703 is an image which is sampled from the image photographed by the camera 104.

As shown in Fig. 16, the display position adjustment module 201B arranges the images 701 and 703 which are input from the image sampling module 210 at predetermined positions of the whole image 710. Accordingly, the display positions of the images 701 and 703 are adjusted. Next, the whole image 710 is created by combining back mirror images 702 and 704 stored in the memory device 30B mentioned below with the images 701 and 703 so as to be input to the distortion correction module 207. In this case, the predetermined position is an optional position.

The distortion correction module 207 corrects the image input from the display position adjustment module 201B based on the distortion correction information which is read from the memory device 30 as described in the first embodiment, and inputs the image signal of the image after the correction to the light flux creating device 401.

The operation reception module 209 (the first and second operation reception modules) accepts the operations of the sampling position operation module 801 and the display position operation module 802.

(memory device 30B)

In the memory device 30B, there are stored the information for deciding the sampling range of the images described in Figs. 14 and 15 and photographed by the cameras 103 and 104, the information of the back mirror images 702 and 704 described in Fig. 16, and the distortion correction information described in the first embodiment.

(irradiation device 40)

The irradiation device 40 basically has the same structure as the first embodiment.

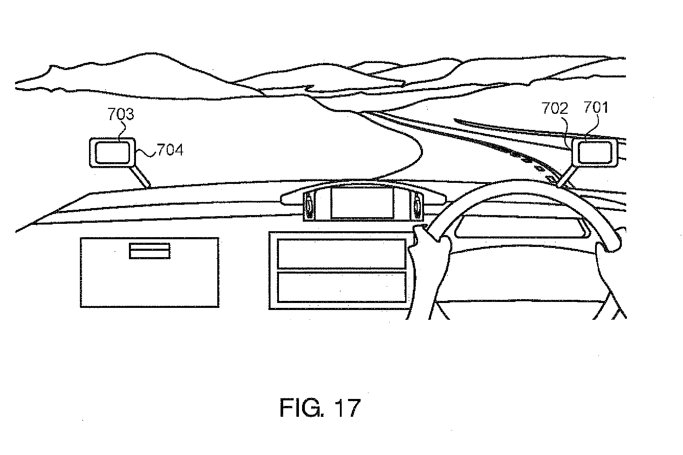

Fig. 17 is a superposition view of the landscape and the image which are recognized by the driver 50 in this third embodiment. The images 701 and 703 irradiated to the single eye 501 and the back mirror images 702 and 704 are viewed by the driver 50 so as to be superposed on the actual landscape.

In this case, the back mirror images 702 and 704 are the images for preventing the visibility from being deteriorated in the case of directly superposing the images 701 and 703 on the landscape. In other words, they are the images for making the driver 50 recognize a boundary between the images 701 and 703 and the actual landscape, and are not necessarily demanded.

In this case, in order to prevent the visibility from being deteriorated in the case that the images 701 and 703 are directly superposed on the landscape without using the back mirror images 702 and 704, a semitransparent or light shielding film may be attached to the front glass 408.

(operation device 80)

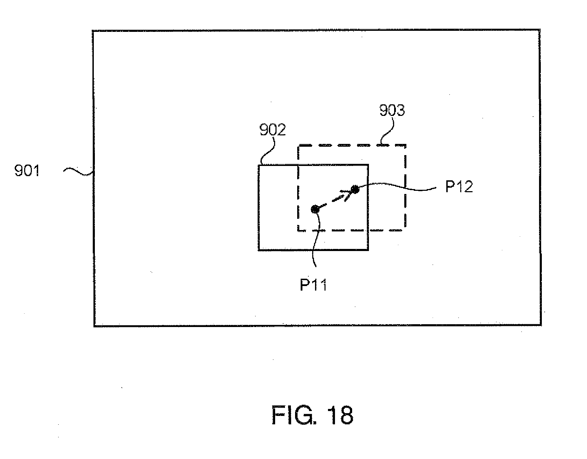

The operation device 80 includes the sampling position operation module 801 and the display position operation module 802. The sampling position operation module 801 is an operation module adjusting the sampling position of the image which is sampled by the image sampling module 206. The image sampling module 208 changes the sampling position of the image corresponding to the operation accepted by the operation reception module 209. Fig. 18 is an explanatory view of an image sampling position adjustment by the sampling position operation module 801.

As shown in Fig. 18, the image sampling module 208 holds a difference between a center P11 of an image 902 which is sampled from an image 901 photographed by the camera 103, and a center position P12 of a sampled image 903 after the adjustment by the sampling position operation module 801 as an offset value.

The image sampling module 208 inputs the image 903 obtained by moving a center position of the image 902 which is sampled from the image 901 photographed by the camera 103 at the previously held offset degree to the display position adjustment module 201B. In this case, the image which is sampled from the image photographed by the camera 104 is adjusted in the same manner.

The display position operation module 802 adjusts the display positions of the images 701 and 703 shown in Fig. 16. The image sampling module 208 changes the display positions of the images 701 and 703 corresponding to the operation accepted by the operation reception module 209.

The display position adjustment module 201B holds a difference between the display positions of the images 701 and 703 which are set by an initial setting or the like, and the display positions of the images 701 and 703 after the adjustment, as an offset value, in the same manner as the case of the image sampling module 210.

Next, the display position adjustment module 201B moves the display positions of the images 701 and 703 at the previously held offset degree, and thereafter combines the back mirror images 702 and 704 with the display positions of the images 701 and 703 so as to input to the distortion correction module 207. In this case, it is possible to individually adjust the display positions of the image 701 and the back mirror image 702, or the display positions of the image 703 and the back mirror image 704, by the display position operation module 802.

(image creating motion)

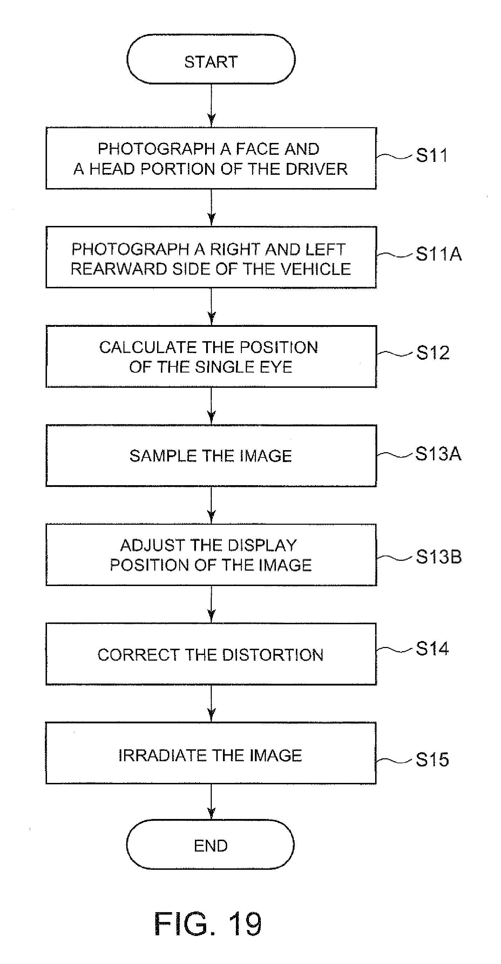

Next, a description will be given of an image creating motion by the image irradiation system 3. Fig. 19 is a flow chart explaining the image creating motion by the image irradiation system 3.

First of all, the cameras 101 and 102 respectively photograph a face and a head portion of the driver 50 (step S11), and input the photographed image to the position calculation modules 202 and 205. The cameras 103 and 104 respectively photograph a right rearward side and a left rearward side of the vehicle (step S11A), and input the photographed image to the image sampling module 208.

The position calculation module 202 detects the single eye 501 of the driver 50 from the photographed image input from the camera 101. Next, the position calculation module 202 calculates the position of the single eye 501 on the YZ surface from the pixel position on the image of the detected single eye 501.

The position calculation module 205 detects the center position 502 of the head portion of the driver 50 from the photographed image input from the camera 102. Next, the position calculation module 205 calculates the position of the single eye 501 on the XY surface from the pixel position on the image of the center position 502 of the detected head portion.

The position calculation module 206 calculates the position of the single eye 501 in the XYZ space from the position on the YZ surface of the single eye 501 calculated by the position calculation module 202 and the position of the single eye 501 on the XY surface calculated by the position calculation module 205 so as to input to the image sampling module 208 (step S12).

The image sampling module 210 samples at least a part of the image photographed by the cameras 103 and 104 from the position of the single eye 501 which is calculated by the position calculation module 206 and the information stored in the memory device 30B (step S13A). The image sampling module 210 inputs the sampled image to the display position adjustment module 201B.

The display position adjustment module 201B adjusts the display position of the image which is input from the image sampling module 210 (step S13B), thereafter creates the whole image by combining the back mirror image with this image, and input to the distortion correction module 207.

The distortion correction module 207 corrects the distortion which is generated by the rotation of the mirror of the irradiation position control module 404 (step S14), and inputs the image signal after the correction to the irradiation device 40. The irradiation device 40 creates the image from the image signal input from the distortion correction module 207 so as to irradiate to the single eye 501 (step S15).

(following motion of irradiated image)

A following motion of the image which is irradiated from the image irradiation system 3 is basically the same as Fig. 9 in the first embodiment.

As mentioned above, the image irradiation system 3 according to the third embodiment irradiates the image in the rear of the vehicle which is photographed by the cameras 103 and 104 to the single eye 501 of the driver 50. Accordingly, the driver 50 can recognize the rear side of the vehicle without widely moving the view point. Further, since it is not necessary to install the back mirror in an outer side of the vehicle, a design characteristic and an aerodynamic characteristic of the vehicle can be improved.

Since the image is irradiated only to the single eye 501 and the binocular parallax is not generated, it is possible to recognize the same perspective as the normal back mirror. Accordingly, it is possible to effectively inhibit an accident from being generated due to an erroneous recognition of a distance at a time of turning right and left and changing lanes.

Since the sampling position operation module 801 and the display position operation module 802 are provided, it is possible to change the sampling position and the display position of the images 701 and 703 corresponding to the predilection of the driver 50 and a good usability can be obtained.

Since the distortion generated by the rotation of the mirror provided in the irradiation position control module 404 is corrected, it is possible to effectively reduce the distortion of the images 701 and 703 and the back mirror images 702 and 704 which are recognized by the single eye 501.

Further, since the sampling position of the image which is photographed by the cameras 103 and 104 is changed corresponding to the position of the single eye 501, it is possible to use according to the same sensation as that of the normal back mirror.

Fourth Embodiment

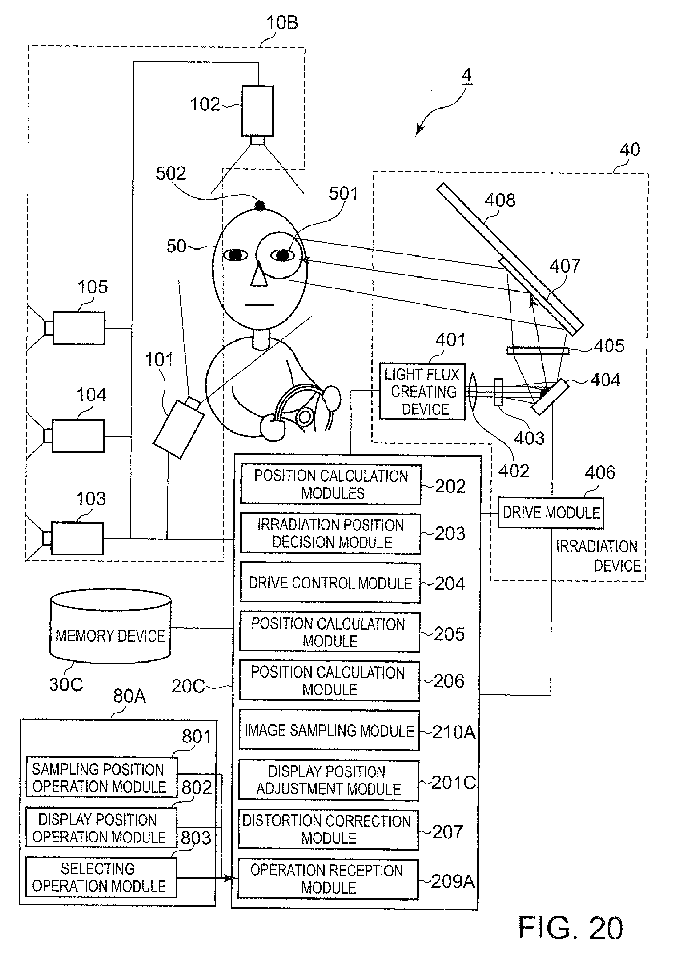

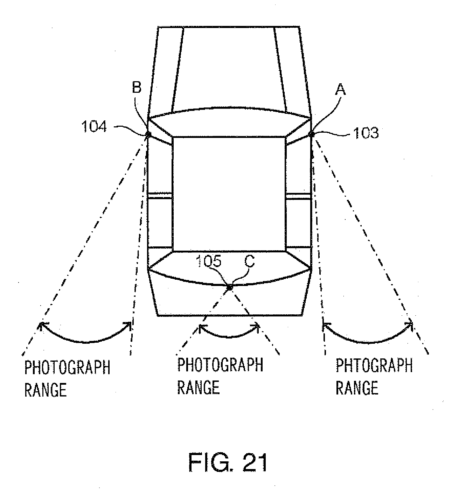

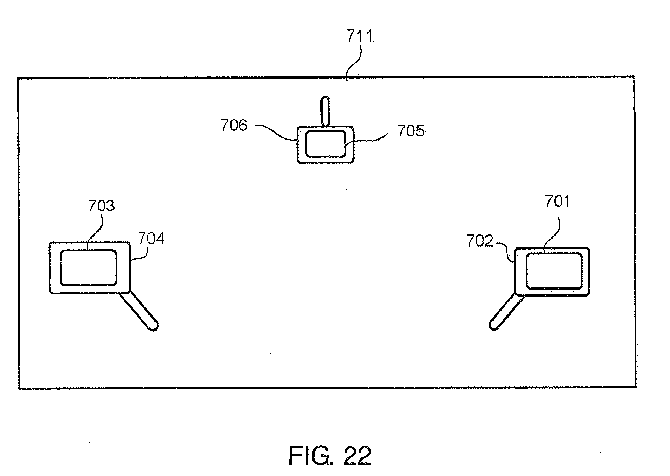

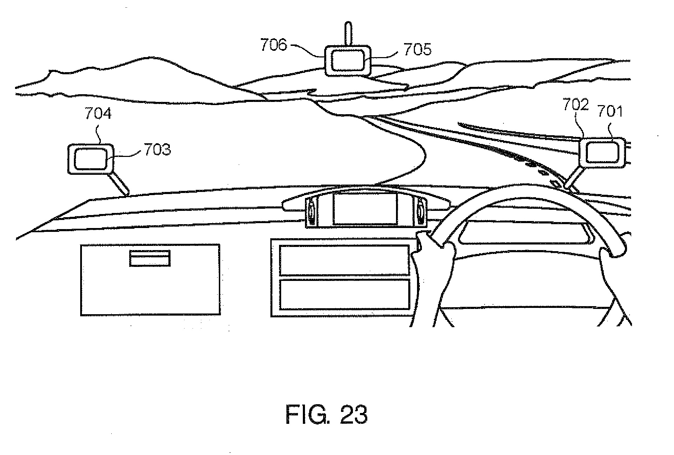

Fig. 20 is a configuration view of an image irradiation system 4 according to a fourth embodiment. Fig. 21 is a view showing the installed positions of the cameras 103 to 105 provided in the photographing device 10B. A one-dot chain line in Fig. 21 expresses the photographing ranges of the cameras 103 to 105. Fig. 22 is a view showing a whole image 711 created by a display position adjustment module 201C. Fig. 23 is a superposition view of a landscape and an image which are recognized by the driver 50 in the fourth embodiment.

In this fourth embodiment, the camera 105 photographing the rear side of the vehicle is further provided within the second photographing module, and the image in the rear side of the vehicle which is photographed by the camera 105 is irradiated to the single eye 501. Further, the image to be actually irradiated to the single eye 501 can be selected from the images photographed by the cameras 103 to 105. A description will be given below of a concrete structure. In this case, the same reference numerals are attached to the same constructing elements as the constructing element described in Fig. 12, and an overlapped description will not be repeated.

As shown in Fig. 21, the camera 105 (a third camera) is installed at a point C in the vehicle rear portion and photographs the rear side of the vehicle. A one-dot chain line in Fig. 21 expresses the photographing ranges of the cameras 103 to 105. In this case, the point C is one example of the installed position of the camera 105, and may be set to the other positions as far as it can photograph the rear side of the vehicle.

In the memory device 30C, there is information for deciding the sampling range of the image which is photographed by the camera 105, in addition to the information stored in the memory device 30B according to the third embodiment.

The image sampling module 210A samples at least a part of the images photographed by the cameras 103 to 105, from the position of the single eye 601 which is calculated by the position calculation module 205, and the information stored in the memory device 30A. Further, the image sampling module 210A inputs the sampled image to the display position adjustment module 201C. In this case, a method for sampling the image photographed by the camera 105 is the same as the method described in Fig. 14.

The display position adjustment module 201C adjusts the display positions of the images 701, 703 and 705 which are input from the image sampling module 210A, and thereafter combines the back mirror images 702, 704 and 706 with the images 701, 703 and 705 so as to create the whole image 711, as shown in Fig. 22. Next, the whole image 711 is input to the distortion correction module 207. In this case, the adjustment of the display position is the same as the method described in Fig. 16.

As a result, as shown in Fig. 23, the images 701, 703 and 705 irradiated to the single eye 501 and the back mirror images 702, 704 and 706 are views by the driver 50 while being superposed on the actual landscape.

The selecting operation module 803 selects the cameras 103 to 105. The operation of the selecting operation module 803 is carried out by the driver of the vehicle. The operation reception module 209A accepts the selecting operation in the selecting operation module 803. The image sampling module 208A carries out the image sampling only about the images which are accepted by the operation reception module 209A and photographed by the camera, and inputs the sampled images to the display position adjustment module 201C.

Accordingly, each time when the driver 50 operates the selecting operation module 803, the image irradiated to the single eye 501 is changed to the image obtained by respectively combining the back mirror images 702 and 704 with the images 701 and 703, the image obtained by combining the back mirror image 706 with the image 705, or the image obtained by respectively combining the back mirror images 702, 704 and 706 with the images 701, 703 and 705.

As mentioned above, the image irradiation system 42 according to the fourth embodiment includes the camera 105 photographing the rear side of the vehicle, and irradiates the image 705 in the rear side of the vehicle to the single eye 501. Accordingly, it is possible to recognize the rear side of the vehicle without widely moving the view point. Further, since the selecting operation module 803 selecting the images 701, 703 and 705 is provided, it is possible to recognize the rear side of the vehicle or a rearward area when the need arises. The other effects are the same as those of the third embodiment.

Fifth Embodiment

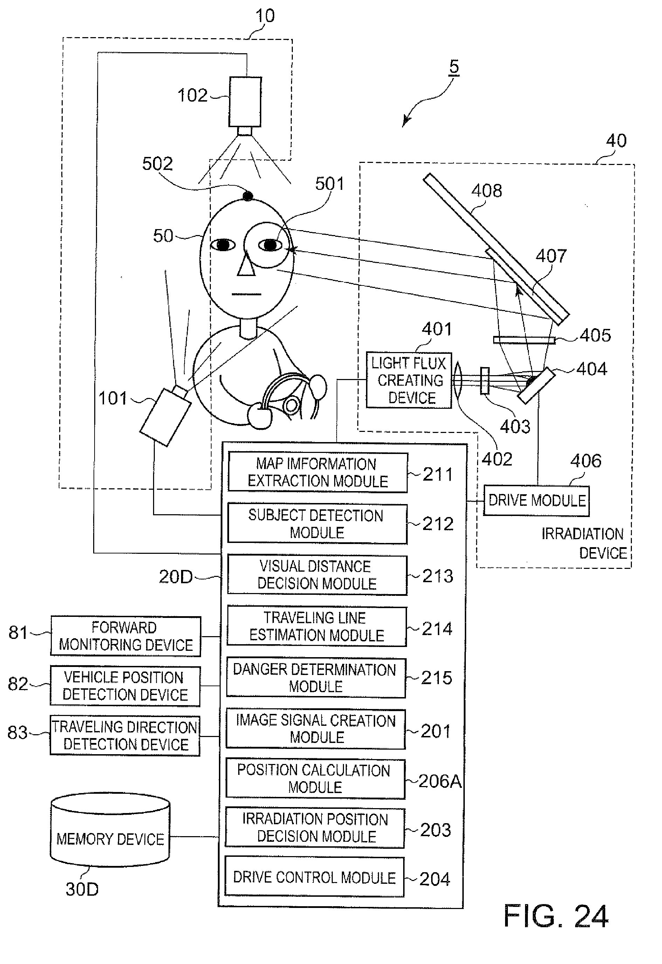

Fig. 24 is a configuration view of an image irradiation system 5 according to a fifth embodiment of the present invention. The image irradiation system 5 includes a forward monitoring device 81, a vehicle position detection device 82, a traveling direction detection device 83, the photographing device 10, a central processing module 20D, a memory device 30D and the irradiation device 40.

A description will be in detail given below of each of the structures.

The forward monitoring device 81 monitors a front side of the vehicle. As the forward monitoring device 81, it is possible to utilize any one of a stereo camera (for a visible light and for an extreme infrared radiation), a millimeter wave radar and a laser radar or a combination thereof. In this case, the stereo camera, the millimeter wave radar and the laser radar serve as a measurement module for measuring a distance to an object.

In this case, it is preferable to align one of the photographing device constructing the stereo camera with a standard visual line direction from the single eye 501 of the driver 50. It is possible to create an image having less uncomfortable feeling as seen from the driver 50, by carrying out the image creation by the image signal creation module 201 while using the image from the photographing device.

The stereo camera can be constructed by a pair of photographing devices photographing the front side of the vehicle. It is possible to calculate a distance to a subject (for example, an obstacle, a vehicle and a white line on a road) due to a parallax between the photographing devices by using a pair of photographing devices (a kind of trigonometrical survey).

The stereo camera can employ both one for the visible light and one for the extreme infrared radiation. If the stereo camera for the visible light is used, it is possible to determine a visible distance (a visual distance) in the fog. For example, the visual distance can be determined based on the distance of the obstacle and the white line on the road which can be detected by the stereo camera. If the stereo camera for the extreme infrared radiation is used, it is possible to detect a human being and an animal based on a body temperature.

The millimeter wave radar can monitor the subject and its distance by transmitting a radio wave (a millimeter wave) in 76 GHz band, and receiving the radio wave reflecting by the subject (for example, the obstacle, the vehicle or the white line on the road) so as to return. Even in the case that the visual distance in the fog is short, it is possible to monitor the forward subject.

The laser radar can monitor the subject and its distance by radiating a laser light and receiving the laser light reflecting by the subject (for example, the obstacle, the vehicle or the white line on the road) so as to return. Even in the case that the visual distance in the fog is short, it is possible to monitor the forward subject. In this case, if a buffer stop pole is installed along a road side, it is possible to detect the distance from the road side by using the laser radar.

The vehicle position detection device 82 is structured such as to detect the position of the vehicle, and serves as a position detection module detecting the position of the vehicle. As the vehicle position detection device 82, for example, a global positioning system (GPS) can be utilized. In other words, it is possible to detect a distance from each of three of more GPS satellites and further detect the position of the vehicle, by receiving the radio wave from the satellites and multiplying a time difference from the transmission to the reception by a propagation speed of the radio wave. In this case, it is possible to secure a position precision about 0.01 to 0.05 m by utilizing a radio wave received by the other reference point than the vehicle such as a real time kinematic (RTK) or the like.

As the vehicle position detection device 82, it is possible to utilize a magnetic marker sensor and a radio wave marker sensor, in addition to the GPS. In other words, the magnetic markers and the radio wave markers are embedded in a road surface along a traffic lane at a fixed distance, and an existence thereof is detected by a magnetic marker sensor (a magnetic sensor) and a radio wave marker sensor (a radio wave sensor). According to this structure, it is possible to detect a relative position of the vehicle with respect to the traffic lane, and it is possible to detect the vehicle position at a higher precision.

The traveling direction detection device 83 is structured such as to detect a traveling direction of the vehicle, and serves as a direction detection module. A result of detection by the vehicle position detection device 82 can be utilized for this detection. In other words, it is possible to detect a moving direction and a moving speed of the vehicle by continuously detecting the positions of the vehicle by the vehicle position detection device 82 and calculating a difference of these positions.

The traveling direction detection device 83 may be constructed by a steering sensor. In other words, an angle (a steering angle) of a steering wheel is acquired by the steering sensor. If an initial value of the traveling direction is known, a current traveling direction can be calculated by integrating it by the acquired steering angle. In this case, a moving speed of the vehicle can be acquired by the speed sensor.

The photographing device 10 is basically the same as that described in the first embodiment.

The central processing module 20D includes map information extraction module 211, a subject detection module 212, a visual distance decision module 213, a traveling line estimation module 214, a danger determination module 215, the image signal creation module 201, the position calculation module 206A, the irradiation position decision module 203, and the drive control module 204. In this case, an illustration of the distortion correction module 207 is omitted in Fig. 24; however, the distortion correction of the image may be carried out as mentioned above by adding this.

The map information extraction module 211 extracts the map information from the memory device 30D based on the result of detection (the vehicle position information and the traveling direction information) in the vehicle position detection device 82 and the traveling direction detection device 83. In the memory device 30D, there is stored three-dimensional map information including a sign on the road (a distance sign and the like), a white line, a center line, a road side line, a guard rail, a horizontal line and the like, in addition to the road and the building, as mentioned below. The map information extraction module 211 extracts a part of the map information in such a manner as to correspond to the position and the traveling direction of the vehicle. This is because of creating the image in the vehicle forward direction as seen from the driver 50.

The subject detection module 212 detects the subject (the vehicle, the obstacle, the human being, the animal and the white line) from the forward monitoring device 210, for example, the stereo camera (for the visible light and for the extreme infrared radiation), the millimeter wave radar or the laser radar. The subject detection module 212 detects and classifies the image corresponding to the subject by comparing the image output from the stereo camera or the like with the standard image stored in the memory device 30D. Specifically, the various subjects (the vehicle, the obstacle, the human being, the animal and the white line) are detected by the following manner.

In this case, the subject detection module 212 detects the movement of the object based on a temporal change of the distance to the object which is calculated by the stereo camera, the millimeter wave radar, or the laser radar. In other words, the subject detection module 212 serves as a movement detection module.

(1) vehicle

It is possible to measure the magnitude and the distance of the forward subject by using the stereo camera (for the visible light and for the extreme infrared radiation). In the case that the forward subject is determined to be within the white line and have the magnitude of the vehicle, it is assumed as the vehicle. Further, based on the distance to the subject and the relative speed which are obtained by any of the millimeter wave radar and the laser radar, the subject existing in front of the own vehicle and having the magnitude of the vehicle is detected as the vehicle.

(2) obstacle

The obstacle is detected by the distance to the subject and the relative speed which are obtained by any of the stereo camera, the millimeter waver radar and the laser radar in the same manner as the item (1). The obstacle may be assumed in the case that it has a magnitude equal to or more than a predetermined size (for example, several cm) and exists in the traveling direction of the vehicle detected by the traveling direction detection device 83. In this case, the obstacle and the vehicle can be differentiated based on with or without movement. Even if the magnitude of the subject corresponds to the vehicle, in the case that it does not move, it is assumed to be the obstacle.

(3) human being and animal

If the stereo camera of the extreme infrared radiation or a near infrared radiation (or a single imaging element) is used, it is possible to acquire an image having a different temperature from the periphery, for example, the body temperature of the human being and the animal. The human being or the animal is detected by carrying out a pattern matching to a characteristic shape of the human being or the animal based on this image. The characteristic shape is stored as one kind of the standard images in the memory device 30D.

(4) white line

A set of the straight lines or the broken lines arranged on the road surface is detected according to an image recognition based on the result of measurement of the stereo camera (for the visible light and for the extreme infrared radiation) and the laser radar, and the subject changing with a vanishing point toward the horizontal direction is assumed to be the white line. Even if the vanishing point does not exist actually, a vanishing point may exist on an extension line of the line.

The visual distance decision module 213 decides the visual distance based on the image which is classified as the white line by the subject detection module 212 and the distance thereof. In other words, a corresponding relationship between the detected white line and the distance is determined, and a limit of the distance at which the white line is detected is assumed to be the visual distance.

The visual distance may be decided by using the distance to the forward obstacle obtained by the stereo camera without being limited to the white line. Specifically, the distances to a plurality of positions (measurement points) are measured by the stereo camera, and the maximum value of the measured distances is decided to the visual distance. In this case, in order to secure the measured range and the precision of the visual distance, it is preferable that the distances to be measured include a near distance to some extent and a far distance to some extent, and are distributed thickly to some extent. For example, it can be thought to optionally select a sufficiently great number of measurement points from the photographing range of the stereo camera.

The traveling line estimation module 214 estimates a traveling line (an estimated travel locus) of the vehicle on the map from the vehicle traveling direction detected by the traveling direction detection device 83.

The danger determination module 215 determines with or without a danger (with or without necessity of attention) and the kind thereof, based on the result of detection by the subject detection module 212, as follows.

(1) subject

When it is estimated that the subjects (the human being, the animal and the obstacle) are arranged on or move to the traveling line estimated by the traveling line estimation module 214 or the vicinity thereof, the danger is determined. It is possible to determine with or without the danger based on the relationship between the traveling line and the position of the subject. In this case, it is possible to determine a level of the danger based on the distance to the subject.

(2) vehicle

When the vehicle is arranged on the traveling line estimated by the traveling line estimation module 214 and the vicinity thereof, and the distance to the vehicle comes close, the danger is determined. A level of the danger can be determined based on a speed coming close to the vehicle.

The image signal creation module 201 creates the image to be provided to the driver 50. The image is based on the following information.

(1) map information

The image is created based on the map information extracted by the map information extraction module 211. This image includes the spatial perception information (the distance sign display, the horizontal line, the guard rail, the road side line and the center line) which can emphasize the distance feeling.

The spatial perception information includes a case that it highlights only a characteristic by deforming in addition to a case that it really display in a superposing manner by the three-dimensional image.

(2) result of detection

The images of the subjects (the vehicle, the obstacle, the human being, the animal and the white line) which are detected and classified by the subject detection module 212 are created. Further, the distance to the subject may be displayed as occasion demands.

As mentioned above, it is preferable to create the image corresponding to the result of detection by aligning one of the photographing devices constructing the stereo camera with the standard visual line direction from the single eye 501 of the driver 50 and using the image from the photographing device. It is possible to create an image having less uncomfortable feeling in view of the driver 50. In this case, it is possible to adjust the position displaying the image corresponding to the subject, by utilizing the position (the view point) of the single eye 501 of the driver 50 which is calculated by the position calculation module 206A.

In the case that a forward forecast is bad (the visual distance is short) due to the fog or the like the monitoring by the forward monitoring device 210 becomes insufficient, and there is a possibility that the subject detected by the subject detection module 212 is limited. Even in this case, it is preferable to create the image of the subject detected by the subject detection module 212 in conjunction with the image based on the map information.

(3) danger information

The danger information based on the result of determination of the danger determination module 215 is displayed.

(4) traveling line

The image corresponding to the traveling line which is estimated by the traveling line estimation module 214 is created.

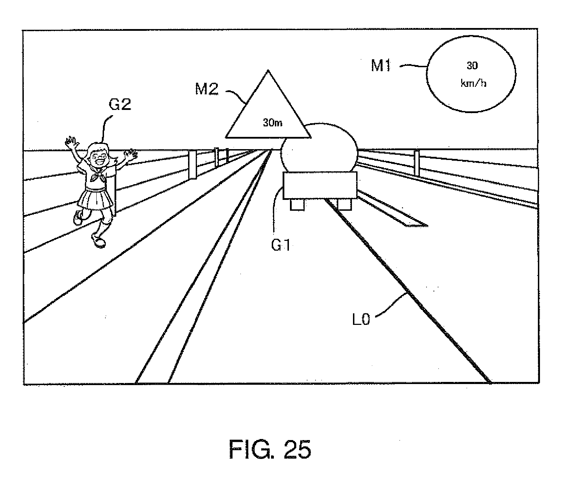

Fig. 25 is a view expressing one example of the image created by the image signal creation module 201. A background image on which the horizontal line, the guard rail, the road side line and the center line are expressed is displayed based on the map information. An image G1 of the detected vehicle, an image G2 of the human being and an estimated traveling line L0 are displayed in a superposing manner on the background image. A vehicle traveling speed M1 and a distance M2 to the detected vehicle are displayed.

In this case, the image signal creation module 201 can control with or without creation of the image signal in the image signal creation module 201 and a range of the created image, based on the visual distance decided by the visual distance decision module 213.

If the visual distance is sufficiently large (for example, in the case that it is larger than a predetermined reference value), a visibility of the driver 50 is sufficient, and it is not necessary to create the image in the image signal creation module 201 or irradiate by the irradiation device 40.

On the other hand, if the visual distance becomes small due to the bad weather such as the fog or the snow storm (for example, in the case that it is smaller than a predetermined reference value), the visibility of the driver 50 is insufficient, and it is necessary to create the image by the image signal creation module 201 or irradiate by the irradiation device 40. In this case, there is a possibility that a visual distance to some extent can be secured (in the case that a close range is visible). At this time, if the image of the visible subject (the subject having the visual distance) is irradiated by the irradiation device 40, there is a possibility that it laps over the actually views subject and it becomes hard on the contrary to view. In this case, it is preferable to create the image of the subject which is farther than the visual distance by the image signal creation module 201, and irradiate it by the irradiation device 40.

The position calculation module 206A calculates a three-dimensional position of a single eye 801 of a driver per image which is input from the cameras 101 and 102. The position calculation module 206A calculates the position of the single eye 501 on a plane (hereinafter, refer to as YZ surface) which is vertical to the vehicle traveling direction based on the image by the camera 101. The position calculation module 206A calculates the position of the center 502 of the head portion on the XY surface, based on the image by the camera 102. The position calculation module 206A calculates the thee-dimensional position of the single eye 501 based on the positions on the YZ surface and the XY surface. In other words, the position calculation module 206A has the respective functions of the position calculation modules 202, 205 and 206 in the first embodiment in conjunction.

A method for calculating the position of the single eye 501 on the YZ surface is as described according to Fig. 2. Further, a method for calculating the position of the center 502 of the head portion on the YX surface is as described according to Fig. 3.

The irradiation position decision module 203 decides the position irradiating the image based on the position of the single eye 501 which is calculated by the position calculation module 206A.

The drive control module 204 outputs the control signal to the drive module 406 in such a manner that the image is irradiated to the irradiation position which is decided by the irradiation position decision module 203.

The map information and the standard image are stored in the memory device 30D. As the memory device 30D, the semiconductor memory, the magnetic memory, the optical disc and the like can be used. The map information includes the three-dimensional information of the spatial perception information (the distance sign display, the horizontal line, the guard rail, the road side line and the center line). The standard image is constructed, for example, by the vehicle standard image, and is used for detecting the subject in the subject detection module 212. The memory device 30D serves as a memory module storing the map information.

An internal structure and a function of the irradiation device 40 are basically the same as those of the first embodiment.

As mentioned above, the image superposed by the background image and the forward vehicle, obstacle, human being and animal is projected to the single eye 501 of the driver 50. AS the projected image seen from the driver 50,is recognized so as to be displayed over the front glass 408 in the same manner as the actual background, the movement of the visual line is not necessary. The display by the projection mentioned above is effective in the case that the visual distance is short due to the bad weather or the like. In the case that the visual distance is short, if a state around the vehicle is displayed, for example, by using a liquid crystal device, the movement of the visual line is necessary and there is a risk that a safety of the drive is deteriorated.

The following advantages are generated by projecting the image onto the single eye 501.

(1) In the case that the forward field of view is not good, a depth feeling is enhanced in comparison with the normal case. Even in the case that the background is white and a feeling of distance can not be obtained, it is possible to recognize the white lines in the road side and the center and the forward vehicle with a feeling of distance. Since the virtual image displayed in a superposing manner is viewed at a certain fixed distance if the image is projected to both eyes, the visibility is deteriorated, and the driver tends to be tired. The depth in the image can not be recognized and the image is seen as one picture. Since the background does not exists in the case of both eyes viewing, the feeling of distance of the virtual image by a binocular parallax is unnecessarily enhanced.

(2) The depth feeling can be provided by utilizing the three-dimensional display for these images. It is possible to superpose the 3D display having the depth feeling of the forward vehicle, human being and animal and the distance information, and enhance the feeling of distance in a depth direction.

(3) It is often the case that the actual background in the short distance can be viewed, this is less obstructed in the single eye.

(motion of image irradiation system 5)

A description will be given of a motion of the image irradiation system 5.

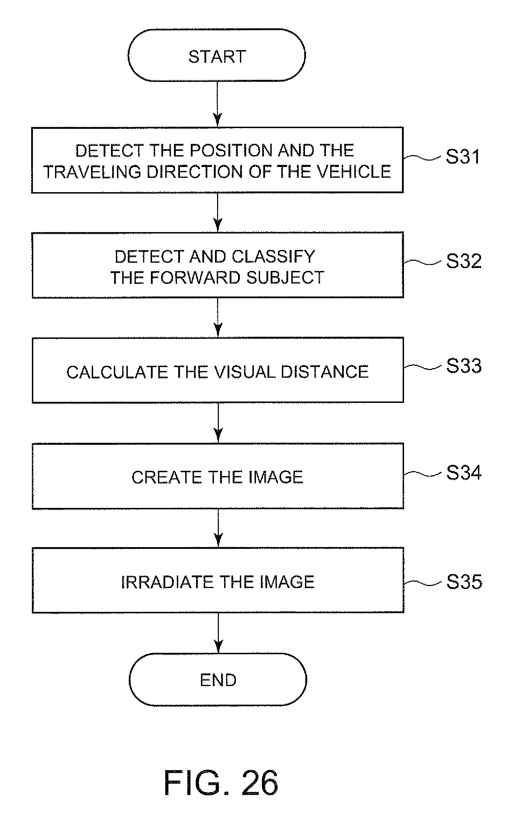

Fig. 26 is a flow chart showing a procedure of an image creating motion by the image irradiation system 5.

The position and the traveling direction of the vehicle are detected by the vehicle position detection device 82 and the traveling direction detection device 83 (step S31).

The detection and classification of the forward subject are carried out by the forward monitoring device 210 and the subject detection module 212 (step S32).

The visual distance is calculated by utilizing the white line detected by the subject detection module 212 (step S33).

The danger is determined by the danger determination module 215 based on the information from the forward monitoring device 210, and the danger information is created in the case that the danger is determined.

The image is created based on the result of detection and danger predicting information (step S34). In other words, the map information is extracted and the background image is created based on the position and the traveling direction of the vehicle. The image of the subject (the subject image) detected by the subject detection module 212 is created. The visual distance is used at a time of creating the background image and the subject image, and the creation of the background image and the subject image within the visual distance.

The created image is irradiated to the single eye 501 (step S35). In other words, the position of the single eye 501 is calculated by the position calculation module 206A, and the image is irradiated to this position.

In this case, the creation of the image, the calculation of the position of the single eye 501 and the irradiation of the image are continuously carried out, and an appropriate image as seen from the position of the single eye 501 is created and is irradiated to the single eye 501.

(other embodiments)

The embodiments according to the present invention are not limited to the embodiments mentioned above, but can be expanded and changed, and the expanded and changed embodiments are included in the technical range of the present invention.

The present invention can be applied to all the vehicles traveling on the road.

**Claims**

1. An image irradiation system comprising:

    a first photographing module configured to photograph a driver of a vehicle;
    a position calculation module configured to calculate a single eye position of the driver from an image photographed by the first photographing module;
    an image information generating module configured to create outdoor image information of the vehicle; and
    an irradiation module configured to irradiate the outdoor image information to the single eye position calculated by the position calculation module.

2. The image irradiation system according to claim 1, wherein the image information generating module includes:

    a memory module in which position information of fender poles virtually installed in the vehicle is stored; and
    an image creation module configured to create a projection image of the fender poles at the single eye position, based on a corresponding relationship between the single eye position calculated by the position calculation module and the position information of the fender poles stored in the memory module.

3. The image irradiation system according to claim 2, wherein the image creation module creates a projection image of the fender poles projected so as to converge to the singe eye position, on a virtual screen which is set between the virtually installed fender poles and the single eye position.

4. The image irradiation system according to claim 2 or 3, wherein position information of a plurality of fender poles having different installed positions is stored in the memory module, and
    wherein the image creation module creates a projection image of a plurality of fender poles at the single eye position based on a corresponding relationship between the single eye position which is calculated by the position calculation module and the position information of a plurality of fender poles which is stored in the memory module.

5. The image irradiation system according to claim 4, further comprising a selection reception module accepting which fender poles are selected from the plurality of fender poles,
    wherein the image creation module creates an image of the fender poles which accepted their selection by the selection reception module.

6. An image irradiation method comprising:

    photographing a driver of a vehicle;
    calculating a single eye position of the driver from the photographed image;
    creating an image of fender poles at the single eye position, based on a corresponding relationship between position information of the fender poles which are virtually installed in the vehicle and the calculated single eye position; and
    irradiating the created image to the calculated single eye position.

7. The image irradiation system according to claim 1, wherein the image information generating module includes:

    a second photographing module configured to photograph a rear side of the vehicle; and
    an image sampling module configured to sample at least a part of the image which is photographed by the second photographing module.

8. The image irradiation system according to claim 7, wherein the image sampling module changes a sampling position of the image which is photographed by the second photographing module corresponding to the single eye position which is calculated by the position calculation module.

9. The image irradiation system as claimed in claim 8, wherein the second photographing module includes a first camera photographing a right rearward of the vehicle and a second camera photographing a left rearward of the vehicle.

10. The image irradiation system as claimed in claim 9, wherein the second photographing module further includes a third camera photographing a rear side of the vehicle.

11. The image irradiation system as claimed in claim 10, further comprising a first operation reception module configured to accept a selection operation of the first and second camera or the third camera,
wherein the image sampling module samples at least a part of the image which is accepted by the first operation reception module and photographed by the camera, in the images which are input from the image sampling module.

12. The image irradiation system according to claim 7, further comprising a display position adjustment module configured to adjust a display position of the image which is sampled by the image sampling module,
wherein the irradiation module irradiates an image in which its display portion is adjusted by the display position adjustment module to the single eye position which is calculated by the position calculation module.

13. The image irradiation system according to claim 12, further comprising a second operation reception module configured to accept an adjustment operation of a display position of the image which is sampled by the image sampling module,
wherein the display position adjustment module changes a display position of the image which is sampled by the image sampling module, corresponding to the operation accepted by the second operation reception module.

14. An image irradiation method comprising:

photographing a driver of a vehicle;
photographing a rear side of the vehicle;
calculating a single eye position of the driver from the photographed driver image;
sampling at least a part of the photographed vehicle rear side image; and
irradiating the sampled image to the calculated single eye position.

15. The image irradiation system according to claim 1, wherein the image information generating module includes:

a memory module configured to store map information;
a direction detection module configured to detect a traveling direction of the vehicle; and
an image creation module configured to create an image of the vehicle in the traveling direction based on the map information, and the position and the traveling direction which are detected by the position calculation module and the direction detection module.

16. The image irradiation system as claimed in claim 15, further comprising a vehicle and obstacle detention module configured to detect a vehicle or an obstacle in front of the vehicle,
wherein the image creation module creates an image including the vehicle or the obstacle detected by the vehicle and obstacle detection module.

17. Te image irradiation system as claimed in claim 16, further comprising:

an estimation module configured to estimate a travelling line of the vehicle based on the travelling direction detected by the direction detection module; and
a determination module configured to determine with or without a danger based on the travelling line estimated by the estimation module, and a position of the vehicle or the obstacle detected by vehicle and obstacle detection module.

18. The image irradiation system as claimed in claim 16 or 17, wherein the vehicle and obstacle detection module includes:

a photographing device configured to photograph an image of a visible light or an infrared light, or a radar transmitting and receiving an electromagnetic wave or a laser light; and
a detection module configured to detect the vehicle or the obstacle from the image of the photographing device or the radar.

19. The image irradiation system as claimed in claim 15, further comprising a human being and animal detection module configured to detect a human being or an animal in front of the vehicle,
wherein the image creation module creates the human being or the animal which is detected by the human being and animal detection module.

**20.** The image irradiation system as claimed in claim 19, wherein the human being and animal detection module includes:

a photographing device configured to photograph an image of an infrared light; and
a detection module configured to detect the human being or the animal from the image from the photographing device.

**21.** The image irradiation system as claimed in claim 15, further comprising a measurement module configured to measure a visual distance form the vehicle,
wherein the image creation module creates an image in a range which goes beyond the visual distance set by the measurement module.

**22.** The image irradiation system as claimed in claim 21, wherein the measurement module includes:

a combination of a pair of photographing devices configured to photograph a road surface;
a detection module configured to detect a white line on the road surface from the image of at least any of the pair of photographing devices;
a calculation module configured to calculate a distance to each of a plurality of positions of the white line which is detected by the image detection module, based on the image of the pair of photographing devices; and
a decision module configured to decide a maximum value of the distances at the plurality of positions as the visual distance.

**23.** The image irradiation system as claimed in claim 21, wherein the measurement module includes:

a combination of a pair of photographing devices configured to photograph the road surface;
a selection module configured to select a plurality of positions from the image of at least any of the pair of photographing devices;
a calculation module configured to calculate a distance to each of the plurality of position, based on the image of the pair of photographing devices; and
a decision module configured to decide a maximum value of the distances at the plurality of positions as the visual distance.

**24.** The image irradiation system as claimed in claim 21, wherein the measurement module includes:

a radar transmitting and receiving a laser light with respect to a road surface so as to output a reflection image and a distance to the reflection image;
a detection module configured to detect a white line of the road surface from the reflection image; and
a decision module configured to decide a maximum value of the distances of the white lines detected by the image detection module at a plurality of positions as the visual distance.

**25.** An image irradiation method comprising:

detecting a position of a vehicle;
detecting a traveling direction of the vehicle;
creating an image of the vehicle in the traveling direction based on map information stored in a memory module and the detected position and traveling direction; and
irradiating the created image to a single eye of a driver of the vehicle.

**26.** The image irradiation system according to claim 1, 2, 7 or 15, further comprising a control module controlling an irradiation direction of an irradiation module in such a manner that the image irradiated from the irradiation module is irradiated to the single eye position calculated by the position calculation module.

**27.** The image irradiation system according to claim 1, 2, 7 or 15, wherein the irradiation of the image by the irradiation module is carried out via a front glass of the vehicle or a reflection member attached to the front glass, and
wherein the image information generating module includes a correction module correcting a distortion of the image caused by a shape distortion of the front glass.

**Amended claims under Art. 19.1 PCT**

**1.** An image irradiation system comprising:

a first photographing module configured to photograph a driver of a vehicle;
a position calculation module configured to calculate a single eye position of the driver from an image photographed by the first photographing module;
an image information generating module configured to create outdoor image information of the vehicle; and
an irradiation module configured to irradiate the outdoor image information to the single eye position calculated by the position calculation module.

**2.** The image irradiation system according to claim 1, wherein the image information generating module includes:

a memory module in which position information of fender poles virtually installed in the vehicle is stored; and
an image creation module configured to create a projection image of the fender poles at the single eye position, based on a corresponding relationship between the single eye position calculated by the position calculation module and the position information of the fender poles stored in the memory module.

**3.** The image irradiation system according to claim 2, wherein the image creation module creates a projection image of the fender poles projected so as to converge to the singe eye position, on a virtual screen which is set between the virtually installed fender poles and the single eye position.

**4.** The image irradiation system according to claim 2 or 3, wherein position information of a plurality of fender poles having different installed positions is stored in the memory module, and
wherein the image creation module creates a projection image of a plurality of fender poles at the single eye position based on a corresponding relationship between the single eye position which is calculated by the position calculation module and the position information of a plurality of fender poles which is stored in the memory module.

**5.** The image irradiation system according to claim 4, further comprising a selection reception module accepting which fender poles are selected from the plurality of fender poles,
wherein the image creation module creates an image of the fender poles which accepted their selection by the selection reception module.

**6.** An image irradiation method comprising:

photographing a driver of a vehicle;
calculating a single eye position of the driver from the photographed image;
creating an image of fender poles at the single eye position, based on a corresponding relationship between position information of the fender poles which are virtually installed in the vehicle and the calculated single eye position; and
irradiating the created image to the calculated single eye position.

**7.** The image irradiation system according to claim 1, wherein the image information generating module includes:

a second photographing module configured to photograph a rear side of the vehicle; and
an image sampling module configured to sample at least a part of the image which is photographed by the second photographing module.

**8.** The image irradiation system according to claim 7, wherein the image sampling module changes a sampling position of the image which is photographed by the second photographing module corresponding to the single eye position which is calculated by the position calculation module.

**12.** The image irradiation system according to claim 7, further comprising a display position adjustment module configured to adjust a display position of the image which is sampled by the image sampling module,
wherein the irradiation module irradiates an image in which its display portion is adjusted by the display position adjustment module to the single eye position which is calculated by the position calculation module.

**13.** The image irradiation system according to claim 12, further comprising a second operation reception module configured to accept an adjustment operation of a display position of the image which is sampled by the image sampling module,

wherein the display position adjustment module changes a display position of the image which is sampled by the image sampling module, corresponding to the operation accepted by the second operation reception module.

**14.** An image irradiation method comprising:

photographing a driver of a vehicle;
photographing a rear side of the vehicle;
calculating a single eye position of the driver from the photographed driver image;
sampling at least a part of the photographed vehicle rear side image; and
irradiating the sampled image to the calculated single eye position.

**15.** The image irradiation system according to claim 1, wherein the image information generating module includes:

a memory module configured to store map information;
a direction detection module configured to detect a traveling direction of the vehicle; and
an image creation module configured to create an image of the vehicle in the traveling direction based on the map information, and the position and the traveling direction which are detected by the position calculation module and the direction detection module.

**25.** An image irradiation method comprising:

detecting a position of a vehicle;
detecting a traveling direction of the vehicle;
creating an image of the vehicle in the traveling direction based on map information stored in a memory module and the detected position and traveling direction; and
irradiating the created image to a single eye of a driver of the vehicle.

**26.** The image irradiation system according to claim 1, 2, 7 or 15, further comprising a control module controlling an irradiation direction of an irradiation module in such a manner that the image irradiated from the irradiation module is irradiated to the single eye position calculated by the position calculation module.

**27.** The image irradiation system according to claim 1, 2, 7 or 15, wherein the irradiation of the image by the irradiation module is carried out via a front glass of the vehicle or a reflection member attached to the front glass, and wherein the image information generating module includes a correction module correcting a distortion of the image caused by a shape distortion of the front glass.

FIG. 1

FIG. 2

FIG. 3

FIG. 4

FIG. 5A

FIG. 5B

FIG. 6

FIG. 7

START

PHOTOGRAPH A FACE AND
A HEAD PORTION OF THE DRIVER — S11

CALCULATE THE POSITION
OF THE SINGLE EYE — S12

CREATE THE IMAGE SIGNAL — S13

CORRECT THE DISTORTION — S14

CREATE AND IRRADIATE THE IMAGE — S15

END

# FIG. 8

START

PHOTOGRAPH A FACE OF THE DRIVER — S21

CALCULATE THE POSITION
OF THE SINGLE EYE — S22

DECIDE THE IRRADIATION POSITION — S23

OUTPUT THE CONTROL SIGNAL — S24

END

# FIG. 9

FIG. 10

FIG. 11

FIG. 12

FIG. 13

FIG. 14

FIG. 15

FIG. 16

**FIG. 17**

FIG. 18

START

PHOTOGRAPH A FACE AND
A HEAD PORTION OF THE DRIVER — S11

PHOTOGRAPH A RIGHT AND LEFT
REARWARD SIDE OF THE VEHICLE — S11A

CALCULATE THE POSITION
OF THE SINGLE EYE — S12

SAMPLE THE IMAGE — S13A

ADJUST THE DISPLAY
POSITION OF THE IMAGE — S13B

CORRECT THE DISTORTION — S14

IRRADIATE THE IMAGE — S15

END

FIG. 19

FIG. 20

B A

104 103

105 C

PHOTOGRAPH
RANGE

PHOTOGRAPH
RANGE

PHTOGRAPH
RANGE

FIG. 21

711

706 705

703
704 702 701

FIG. 22

FIG. 23

FIG. 24

FIG. 25

START

DETECT THE POSITION AND THE
TRAVELING DIRECTION OF THE VEHICLE — S31

DETECT AND CLASSIFY
THE FORWARD SUBJECT — S32

CALCULATE THE VISUAL DISTANCE — S33

CREATE THE IMAGE — S34

IRRADIATE THE IMAGE — S35

END

# FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002059798 A

- JP 2005173882 A

**Non-patent literature cited in the description**

- **Takano et al.** ITS for Supporting Safe Road Environment. *Hitachi Review,* September 2004, vol. 86 (9

- **Takano et al.** ITS for Supporting Safe Road Environment. *Hitachi Review,* September 2004, vol. 86